# EUROPEAN PATENT APPLICATION

(11) **EP 1 936 539 A1**
(43) Date of publication of application: **25.06.2008**
(21) Application number: 06761620.1
(22) Date of filing: 02.08.2006
(51) Int. Cl.: G06K 19/00, B07C 5/34

(54) **METHOD OF LABELLING AND DETECTIION OF GOODS AND DEVICE THEREOF**

(30) Priority: 03.08.2005 CN 200510089020
(71) Applicant: True Product ID Technology (Beijing) Limited, Haidian District Beijing 100086 (CN)
(72) Inventor: LI, Ning, 18th Floor West Zone, Haidian District, Beijing 100086 (CN)
(74) Representative: Johnson, Richard Alan
(86) International application number: PCT/CN2006/001946
(87) International publication number: WO 2007/014532

(57) **Abstract**

The present invention provides a method of labeling, detecting and managing goods and device thereof. The method of the present invention includes the step of defining the label of goods. Said label comprises at least one chemical element inheriting in the goods and / or additional chemical element; the step of providing the database, which contains the labeled data; the step of detecting the signal sent by goods, generating detection data and comparing it with the data in the database; the step of determining whether the good to be detected is the labeled good or not according to the comparison test, and reading at least one message of the good in the database. The goods labeling and detecting solution of the present invention can be used in many fields of socioeconomic and administrative management, such as identification, goods labeling, preventing goods from being swapped with others, logistics management, statistics analysis, asset protection and responsibility tracing, etc.

## Description

This Chinese patent application No. 200510089020.1 with an application date of August 3, 2005 requested in the application is hereby incorporated herein in its entirety through citation.

### TECHNICAL FIELD

The present invention relates to a method of labeling and detection of goods and the device and system for achieving such a method.

### BACKGROUND ART

The methods extensively used currently to label goods mainly include the following types:

### 1. Liquid code

Just like paint applied on a surface, liquid is normally placed into a small bottle together with the paintbrush. A database creates an exclusive code for each client; it is extensively suitable in the field of protection of commercial or family properties. A small sample is taken from the labeled item and analyzed at a special center. But only the ownership labeled can be confirmed, and the process of taking a sample from the surface of the item labeled may cause damage to the surface of the item. For example, the surface may be worn out or dissolved. The entire validation process can only be completed after one to two days. In view of the face that what the analytical system identifies is the code of the labeling liquid itself instead of the code of the labeled item, it cannot distinguish ownership of the owner of the item labeled, nor can it communicate remotely with the data host to validate ownership of the item.

### 2. Laser identification of diamonds

Currently, the process to validate and repurchase diamonds uses a laser electronic technology. Such a technology gives a diamond a "fingerprint." A device that generates a low density laser beam vertically shoots at the surface of a diamond. A single laser beam is fired onto many cut surfaces of the diamond and is refracted into many laser beams. Such specific, refracted laser beams are the only optic signals of each diamond. Such signals are electronically analyzed and stored with definitive text information of the diamonds measured into a database. A repurchased diamond can be accurately tested by using information on a computer matching them. The user may receive a copy of the certificate issued by the selling company, to ensure the quality of the diamond. But such an identification method is only limited to specific items such as finished diamonds that have been cut and ground. Methods similar to this one are a very narrow scope of applications.

### 3. Granules

A liquid with an exclusive digital code that are applied in a minute reticular shape and labeled on an item. Such small liquids can be detected by special, mini readers. The reading of a granular digital code is faster than the liquid code described in paragraph 1 because a database can provide the established ownership such granular digital codes by a communications method. Compared with the liquid code described in paragraph 1, the two major advantages of the granular digital code, i.e., the availability of portable detection devices and the ability to validate ownership, can be used to prevent theft.

### 4. Microchips

Microchips are only the size of a rice grain, with a weigh much lower than that of an integrated electronic circuit. They are often packed in a glass capsule 10 mm in size and can emit an exclusive and established digital sequence to which any content is added. The difference from a bar code is that this "chip" can be placed inside most items and can be detected by a reader. Compared with visible labeling (such as labels and serial numbers), this method offers greater advantages. Microchips require no maintenance and are not harmful to health. There are many types battery driven, portable devices. When a chip is close by, it can be activated by merely pushing a button and a unique digital code is quickly obtained. In addition to prevention of loss through theft, microchips also play an auxiliary role in many commercial applications. But microchips cannot be detected behind a metal shield. In addition, they are also not suitable for use as visible marks.

### 5. Etched labels

A durable etched label with a preset code is preserved through a special porous structure on the label through the method of application of a chemical substance. This method is not suitable for an item whose surface is very important and that cannot be etched. Also, detection by a decoder requires visible light.

### 6. Safety labels

Such anti-theft labels are normally combined with tangible label, and the surfaces are bonded with an epoxy adhesive at a high concentration. They can be made into labels with a company logo and bar code. But most suppliers are not able to set up a database system. Affixation of such labels normally requires that detailed registrations or auditing certificates be provided for the uploading load instruments.

### 7. Flexible safety labels

These are labels that use matching laws and applied in commercial fields and are made by being connected to computers and other high value commodities. They are battery driven to control the range of reading at a farther distance and normally create anti-theft devices. In combination with touch type devices and monitoring devices, it is easier for such a system to protect the relevant industry. Specific digits can be applied and changed at will.

But many of the various types of labeling technologies above are attached to or applied on surfaces or are for specific types of materials only. They cannot permeate or read marks that permeate inside an item. Most labels are visible, so it is easy to steal or sabotage them. There is not sufficient safety and it is also easy for the functions of the labels to fail. Some technologies require a longer time for validation, and the volume of data obtained after identification is made is limited. Therefore, it is not easy to form perfect labels and validation methods.

Therefore, a method as well corresponding devices and systems are still needed that not only can safety and durably label an item, but can also safely, accurately and conveniently identify, detect and extract information on an item.

### CONTENTS OF THE INVENTION

The purpose of the present invention is to provide method that not only can safety and durably label an item, but can also safely, accurately and conveniently identify, detect and extract information on an item. Such a method can constitute a complete solution.

The purpose of the present invention is also to provide corresponding devices and system.

The present invention overcomes the shortcomings that it is easy to steal or sabotage the existing item labels or that validation requires a long time, labels cannot permeate and that labels, that have permeated inside an item cannot read and that the volume of data obtained after an identification is made is limited.

The chemical element labeling method in the present invention can adjust the chemical element formula and formula ratio based on differences in the properties of an item, in order to ensure human safety and health and does not harm or pollute the environment. The chemical element labeling method in the present invention can be formed by chemical element labeling components. The element label cannot be duplicated, imitated, stripped and transferred. It can hide in an item and become part of the item. Therefore, it is easy to use. In addition, the formulation ratio is accurate, with quick permeation. Since multiple elements are used, the range of formulation ratio is rather large. A large number of design formulas can be formed, which effectively prevents formula duplication, giving each formula exclusivity. Also, the present method uses the X fluorescent spectrometry to measure the chemical formula ratio of a label, so it has a high repeatability and accuracy. Chemical element labeling has perpetuality. If even an item that has been labeled by an element is destroyed by burning, as long as the carrier still exists, the entire original information can still be analyzed and identified, which provides evidence for accountability, thus making up for the defect that only prevention in advance but no after fact finding is possible.

The portable detection and analysis in the present invention can validate the element labeling information for the identify of an item through an ordinary packaging; the chemical element labeling method in the present invention creates a database for safety and management and can guarantee the use safety of data and quickly perform testing, validation and information feedback on site in real time, thus effectively meeting user needs; an accurate and smart test analysis and database management system can provide the user with a unique item identity label, validation and use.

The present invention has extensive applications. For many products on which the traditional technologies cannot be used, including but not limited to apparel, jewelry, watches, chips, objects of art, plastics, rubber, steel, machinery, gambling, electronic components and parts, metallurgy, cultural relics, notes, vouchers, publications, instruments, crafts, chemical industry and oil products and liquid items, etc., the technology in the present invention can be used for the purpose of identification, validation and information acquisition.

The tracking, positioning and remote authorization and control technologies related to the portable smart analysis and test system can guarantee that when the portable smart analysis and test system is lost or illegally used, the owner can still perform remote and safe control over it.

### CAPTIONS FOR THE FIGURES

Fig. 1 shows an illustrative structure block diagram of the X fluorescent labeling and detection in an embodiment of the present invention;
Fig. 2 shows a spectral sample detected by the X fluorescence in an embodiment of the present invention;
Fig. 3 shows a spectrum of paper detected by the X fluorescent before its burning in an embodiment of the present invention;
Fig. 4 shows a spectrum of paper detected by the X fluorescence after its burning in an embodiment of the present invention;
Fig. 5 is an exterior perspective of the portable reader in an embodiment of the present invention;
Fig. 6 is an illustration of the structure of the data system in an embodiment of the present invention;
Fig. 7 is an illustration of the structure of the K-MAC system in an embodiment of the present invention;
Fig. 8 is an illustration of the structure of the K-MAC data center;
Fig. 9 is a type of K-MAC system statement after the data center compiles statistics, shows and prints it;
Fig. 10 is a histogram to scale generated by the K-MAC system;
Fig. 11 is a line chart to scale generated by the K-MAC system; and
Fig. 12 is a radar chart to scale generated by the K-MAC system (corresponding to Fig. 11).

### SPECIFIC EMBODIMENTS

Following is a detailed description. Technicians in the present field can understand that the embodiments of the present invention are not limited to the specific schemes to be described below. Changes and modifications can be made based on a mastery and understanding, without deviating from the theme subject to request by the present invention for protection.

In summary, the present invention provides a method of labeling and detection of goods and the device and system for managing items, including:
Define the label to be used on an item. Such a label includes at least a chemical element inhering in and selected from an item and / or an added chemical element;
Provide a database. Said database includes the data on said label;
Detect the signal emitted by the item, generate detection data and use such detected data for comparison with the data in the database; and
Based on the comparison result, the database will determine whether the detected item is a labeled item or a non labeled item.

When an item is managed, in addition to the data included on the aforementioned label, the database should also includes at least one piece of information corresponding to said item and reads at least one piece of information regarding said item during detection.

The present invention also includes the device and various applications for achieving said method.

### Element Labeling Technology

The labeling and validation method in the present invention is mainly based on fluorescent spectrometry, optimally X fluorescence spectrometry.

X fluorescence spectrometry itself is already a mature technology capable of being used to identify elements, the concentration of elements and the percentage of elements in substances. Elements are identified through emitting their characteristic X ray wavelength or energy. The percentage of the elements discovered is determined through measurement of the characteristic intensity they radiate.

All atoms have their inherent number of electrons, which are arranged in orbits around an atomic nucleus. In X fluorescence spectrometry, ray is emitted from an excitation source (for example, it may be an X ray, γ ray, α ray and electronic beam, etc.) and hits a sample. Ray from an excitation source has enough energy to hit the electrons on an inner orbit. When such a hit occurs, electrons on an inner layer are struck out in an electronic form. An empty hole appears on the inner layer orbit of electrons, and this state is unstable. At this time, electrons on the orbit on the outer layer will make a transition into the holes on the orbit on the inner layer to restore stability. Since electrons make a transition into the orbit on the inner layer from the orbit on the outer layer, rays will be emitted. Such a ray is the X fluorescent ray. The energy of the X fluorescent ray is determined by the differences in unique the transition energy between the initial and final orbits.

Since what is detected by X fluorescence spectrometry is the X ray generated by transition of the electrons of atoms (chemical element) on the inner layer, it is not affected by changes in the chemical reaction (chemical bonds). The X ray emitted from each chemical element has a specific and exclusive spectral mark, thus allowing the determination as to whether a specific chemical label exists in an item.

The physical and chemical nature of an element label is quite stable, and is not toxic, harmful, polluting and resistant to high temperature (1650 °C to 3000 °C). It is also not volatile, will not wear out and strip. It is resistant to strong acids and alkali, not solvable in water and ordinary organic and inorganic solvents. An element label can permeate selectively and can be attached to the surface of an item and permeate into all items except processed glass and polished diamonds. It is molecularly bonded to and integrated into one with an item without damaging the surface and internal structure of the item. Even if the labeled item is worn, washed, burned, deformed or corroded, the element labeling information still exists. An element label can be made in a liquid or gas state, colored or colorless, to meet the labeling needs and to achieve the purpose of being visible or invisible. An element label can be made on any material larger than the volume of an atom, including but not limited to liquids, metals, rubber, plastics, glass, stones, ceramics, cloth, wood, ink, paper products, adhesives, leather or items with a special material nature, and at the same time, will not be affected by the differences in the shape or size of the item being labeled or change the nature of the item itself or affect the original ingredient percentage of the item. Even if an "element label" is added into pure gold, its gold content can still reach 99.99%. In addition, the chemical element formula and formula ratio can be adjusted depending on the properties of the item to ensure personal safety and health and no damage or pollution to the environment. It is suitable for all items. The use of X fluorescence spectrometry to measure the element formula ratio of a label has a high repeatability and accuracy and has a more comprehensive use range and use value than various types of known technologies. Therefore, chemical element label can be fully used for item labeling.

### Actual example

Following is an example that provides a preliminary explanation of the chemical element labeling method and its feasibility:

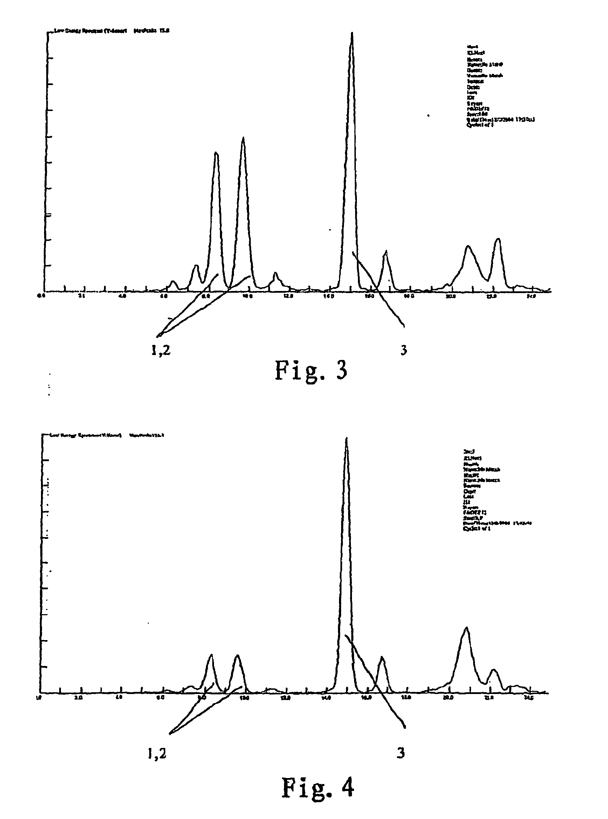

A chemical element label is added to a piece of ordinary paper. The paper containing such a label is scanned with an X fluorescent tester, obtaining the X fluorescence spectrum of said paper. As shown in Fig. 3, wherein peaks 1 and 2 are other ingredients of the paper and peak 3 is the peak value of the present chemical element label.

Then, let the paper burn. After it stops burning on its own, use an X fluorescent scanner to scan the residue again, obtaining the X fluorescence spectrum of said paper after its burning. As shown in Fig. 4, compare the two spectrums above.

It can be clearly seen that even if the state of the item itself has been changed (or even burned), the label still remains unchanged and can still be completely preserved. Regardless of any friction of the label or treatment thereof in any form, the label will still exist on the item.

The element label is a chemical that can permeate the inside structure of substances. We call it the synthetic DNA (S - DNA) of an item.

Following is a detailed explanation of the element labeling technology in the present invention.

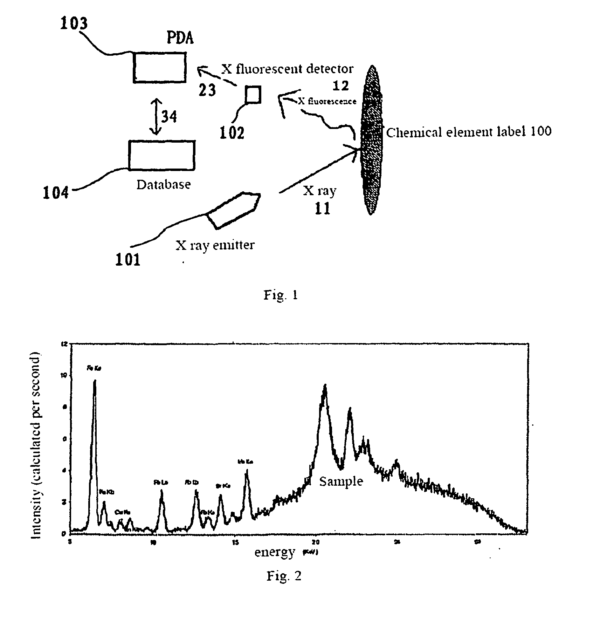

See Fig. 1, wherein label 100 containing at least one chemical element exists or is placed on the item to be labeled. Said at least one chemical element may be inherent in and / or added to the item;

Use an excitation source (such as X ray 11 emitted by X ray emitter 101) to scan said item to excite the label containing at least one chemical element. Detector 102 of the X fluorescent tester detects the X fluorescence 12 emitted by the label containing at least one chemical element, which generates a digital signal of X fluorescent spectrum through AD conversion (spectral data). For an example of X fluorescent spectrum, see Fig. 2 (where the X fluorescent spectra when multiple elements exist are shown). Then said data is transmitted through PDA 103 and link 34 and stored as data of the aforementioned label containing at least one chemical element. Concurrent therewith or subsequent thereto, the property information of said item can be entered into the database with data that corresponds to said label as well as various types of other information regarding said item. It needs to be explained here that the digital signal of X fluorescent spectrum can be further encoded into various types of code data, such as being formed into the so-called fingerprint data, that is, information containing the element, information on the concentration of the element, information on the concentration ratio of the element, formula information and item information. This fingerprint information is stored in database 104 for future comparison. Such encoded or unencoded data is collectively referred to as "labeled data" here.

Based on the present invention, the labeled data can be generated in several ways. The aforementioned method is a method to obtain data on the label by means of detection and scanning and detection. The present invention can also rely on what is stored in the database in advance, such as spectral information, to obtain data on a label through calculations. Since X fluorescent spectrum is itself a mature technology already, a large amount of information can be stored in a database depending on large amount of the corresponding spectral data to be generated after various formulas process the items. Therefore, a database can select any appropriate formula through random calculations to process an item to be labeled, or use a combination of several basic formulas to process an item, as well as to store the data as the label for such an item after calculating such data for processing the item. Such a method can obtain data on a label without actual detection, therefore, it falls into the category of methods to obtain data on a label through calculations or combinations. Of course, data obtained through manual calculation and / or combination methods can also be included. In summary, data in the present invention includes data obtained by means of scanning an item, database calculations and / combinations or a combination of the aforementioned methods.

Based on the present invention, if the X fluorescent spectrum of an item includes multiple (at least more than two) elements, the database may select the spectra emitted by one or several elements thereof for conversion into data on a label (for example, fingerprint data. For relevant explanation, see latter text) that will be stored, instead of converting the spectra emitted by all elements in an item into data on a label (fingerprint data). That is, spectral data can be selectively read through a database. A more detailed explanation will be provided below.

### S-DNA

Synthetic DNA can be any appropriate element and / or chemical capable of passing detection including detection by X fluorescence known or unknown to technicians in the present field. Theoretically, an element can be any one or several elements listed on the periodic table or their chemicals, but considering factors such as the obviousness, ease of detection and low toxicity of spectra, etc., elements with atomic numbers exceeding 5 are optimal. Even more optimal are elements with an atomic number exceeding 22 (titanium), which are elements in d sector and f sector of the periodic table. More optimal are elements selected from the 15 chemical elements below: strontium, rubidium, yttrium, cesium, lanthanum, cerium, praseodymium, rubidium, samarium, europium, gadolinium, terbium, dysprosium, erbium and ytterbium.

A label can be an externally added element and / or chemical or can concurrently include an element and / or chemical inherent in an item. When a certain label is an element and / or chemical inherent in an item, it can be an ingredient that exists in at least a portion of the item.

The amount added to an element label can be determined based on the amount of element used and the energy required. For example, the minimum amount of a labeling element can be determined by the detected limit of an X fluorescent analyzer. The minimum amount of a labeling element can normally be between 100 ppb - 50 ppm. For example, if the concentration of a label is at least 1 ppm and varies from 1 - 1000 ppm, thus generating at least labels with 1,000 concentrations for each element. A larger amount of label or a smaller minimum concentration can be used (for example, with technical advances, further reduction of the minimum content is possible). In many application processes, due to evaporation of the carrier solution, the concentration will increase. For example, the concentration of the labeling element existing in the print ink on the surface of a dry book page is 3 times that of the initial ink, but at this time, the relative ratio of each element still remains unchanged.

A labeling element can exist in various forms in an item. For example, it can exist in any chemical (such as salt) or large molecule or small molecule containing such an element; it can be individually added or added into the item together with other ingredients. In fact, a labeling element can constitute a mix and / or solution together with various ingredients and / or additives. Various ingredients and additives can be added for various purposes, such as adjusting the characteristics of X fluorescence, adjusting the combined characteristics and improving stability, etc. For example, such an element can exist in the form of an inorganic salt and / or organic salt, such as their sodium nitrate, sodium chloride and / or sodium oxalate. The aforementioned organic and / or inorganic sodium solutions are solutions with an extremely high permeability and mix with solvents to form solutions with an extremely high permeability. During use, appropriate consideration can be given also to various other factors. For example, in terms of the selection of the aforementioned organic and / or inorganic salts, sodium nitrate is optimal, but the price of sodium chloride is lower. Among salts used on the same group of labels, the same type of salts is optimal.

The output spectrum generated by at least one of the labels above on an item provides the distinctive "code" of an item. Such code can be based on the number of labels and whether a type exists as well as the concentration ratios of the same or different labels and the position of a label in an item, and various combinations at will with the above characteristics. For example, the same element exists in increments of 1 ppm between concentrations of 1 ppm to 1,000 ppm, which provides 1,000 codes. Also, adding various concentrations of different labels will provide more codes. The ingredients inherent in the same or different labels combined with items can provide more codes as additional labels. Dividing an item into several different parts and providing various concentrations for different labels for each part will further provide more codes.

For example, in the X fluorescent spectrum shown in Fig. 2, the existence of various labeling elements, such as Fe, Cu, Rb, Sr and Mo; the peak value intensity and background intensity of each element can represent the existing concentration of such an element; or the peak value intensity ratio of each element represents the relative concentration ratios of various elements; various forms of the parameters above can be combined at will to provide more codes.

During the manufacture of products, element labels can be added during the production of an item without changing the original production processes and without adding equipment of an enterprise (for example, to be added during the processing of plastic products) and / or after manufacture. If they are added during the manufacture of an item, labels can be mixed in as externally added ingredients or even added as ingredients of the item being made. Labels are attached to the surface of an item or permeate inside an item as information points, thus making it possible to duplicate, imitate, transfer and strip them.

Labels can be added to any location (including the surface) of an item. For example, during production, a label can be evenly added into the entire volume of the item. Again, for example, it can be mixed into a specific portion of an item (such as the four corners of a cube), so that the label can only be detected at such a specific location of the item. Also, various combinations of the quality, type and concentration of a label can be used to generate various shapes or patterns in 1 D, 2D or 3D, so that when the label of an item is scanned, the labeling element also constitutes a code relative to the 1 D, 2D or 3D concentration distribution relative to the position of the item.

When a label is added after an item is made, it can be injected as an impurity, can be plated or precipitated as a coating or film layer using various known chemical and physical methods. A label can also be a part combined with a coating or film layer generated, and can use but not limited to many methods such as application, spraying, precipitation, immersion, mixing and / or printing, to be combined with an item or the packaging of an item. For example, in an embodiment, a label can be combined into the solution or suspended liquids. After being sprayed onto an item, the carrier solvent evaporates or solidifies, whereas the label therein will be attached to the surface of the item or package to be labeled and / or permeate inside the item, thus forming a steady label.

When a chemical element label is added, it can also be made colorless, thus forming an invisible label; or it can be made colored, forming a visible label.

Following is an illustrative description of a process for a typical externally added element, but technicians in the present field can understand that the following description does not constitute any restriction on the present invention. The labeling element added during the process is mainly based on quality to design different label formulas, and then a formulated standard labeling element solution is used to add it into a carrier with a certain volume, before the required additional confirmation ingredients are added, thus forming a chemical element label. In summary:

Select the chemical containing the needed labeling element and an element ratio;

Select a carrier and mix a certain amount of the chemical of the labeling element with the carrier according to the formula; and

Combine the substance containing the chemical element label mixed in step 2 with the item to be labeled, to form a chemical element label.

The chemical of the aforementioned labeling element includes the inorganic salt and / or organic salts of said labeling element. In the same chemical element label, the same type of sodiums is selected on a optimal basis. The aforementioned carriers include: organic solvents and / or inorganic solvents and solid powder, etc.

Additional confirmation ingredients can also be added during the aforementioned step 2. The aforementioned additional confirmation ingredients can be a visible coating, a visible ultraviolet color, a testing reagent and / or a micro label, etc.

During the aforementioned step 3, a label may be added during the production process of an item and a substance containing a chemical element label already mixed can combine with an item to be labeled by using but not limited to application, spraying, precipitation, immersion, mixing and / or printing, The carrier solvent evaporates or solidifies, whereas the label portion therein will be attached to the surface of the item and partially permeate inside the item, thus forming a chemical element label.

More particularly, the following process may be considered:

Prepare a standard solution of the labeling element. Based on the designed, a method to formulate eh standard solution can be used to formulate a standard solution of a certain concentration for various chemical element labels. The solvent of such a solution is normally water, and then such a standard solution is used to formulate the chemical element label, which further facilitates operations.

Select a carrier. A carrier is a substance that facilitates the bonding of a chemical element with the substance to be labeled. A carrier can be insoluble in the standard solution of the hydrate of the aforementioned labeling element, and the labeling element can separate from the carrier solvent. During application, the main requirement is that the surface facilitating such a labeling element be attached to the surface of the item to be labeled and permeate inside the item. As an alternative, the solvent type carrier can be water or alcohol, etc., which are made into a homogeneous phase solution, so as to enable the labeling element to permeate inside the item in part or in whole. During the application, mix the labeling element together with the carrier, and attach them to the surface of the item and permeate the inside the item using the minimum amount needed. The labeling element can be used on any surface at any temperature or in any environment. The key role of the carrier is to attach to the surface of an item for a sufficiently long time, so that the chemical element label can be attached to the surface of the item and permeate the inside the item. The surfaces of many items, such as wood, paper, rubber or light steel, etc., can quickly complete the permeation process. On denser substances, such as plastics and nickel alloys, etc., on the condition that extraordinary carrier solvents are used for support, the permeation process may take longer.

More particularly, there are the following several types of selectable carriers on a optimal basis:

Can form multiple phase mixtures with the labeling element: such a carrier solvent is an organic carrier solvent, which may include fatty hydrocarbon, aromatic hydrocarbon or alcohols, etc., (representatives are oil soluble paints, lacquer and anti-insect paint). The safety issue that needs to be considered for the operator, who is exposed due to occupational contact, is another factor in the selection of a suitable carrier solution. Based on such a consideration, water and alcohol group solutions may have the weakest potential irritating smell. Various types of flowable lacquer can be hardened naturally without any catalyst. They can form clean and hard surfaces after becoming dry and can be tightly bonded to many surfaces. They are very thin and almost invisible on the surfaces of many items. After they become dry (3 to 5 days0, they can resist dissolution by most ordinary solutions. The solvents of such paints are normally aromatic hydrocarbons, such as toluene. The optimal carrier solutions for the present invention: lacquer. It can be used on items such as metals and plastics, etc., and becomes dry within about 10 minutes. It also becomes vulcanized within 30 days, with little smell, so it can be used on various occasions due to its hard surface and good resistance to acids. For most items, it enables a chemical element to be better attached to the surface of an item and to permeate inside the item.

Form a homogenous phase mixture with the labeling element: a water soluble carrier solvent can be alcohol, ethylene glycol and other water soluble surface active ingredients which take up a great percentage of the components. They can form very gentle homogenous phase label components. The carrier solvent dries quickly, whereas the labeling element is kept on the item. Such carrier solvents can also be used on plastic products.

Epoxy resins: When such a resin is used it is mixed with another catalyst and then solidifies later. But prior to use, a significant amount also becomes hard and cannot be used due to such loss. Such epoxy resins have a strong permeability as well as very good resistance to acid and solubility. When such a carrier solvent is used, the label may become visible.

To further enhance the effect of a chemical element label, such as to facilitate positioning when a label is made at a specific location of an item, existing confirmation ingredients may also be added into the aforementioned chemical element label component mentioned above. As auxiliary ingredients, they are normally included in all chemical element label components, and can be waived at the request of a client. Following are some of the non-restrictive examples for additional determination ingredients:

Visible coatings: use a florescent coating to form a visible chemical element label component. The coating is mixed according to the client's need, but it is better to mix many coatings to form a unique spectrum. For example, use a mixed coating with a 25% volume ratio, and add the coating in a powdery form into the carrier solvent and mechanically vibrate until the coating is fully dissolved. Such a mix forms the basis for label additives metered in the form of quality.

The invisible ultraviolet color: It is an ultraviolet color with a strong performance and is measured in the form of mass ratio. This is a precise measurement that requires maintenance. Fr example, use 1 to 200 W/ W for calculations. The dye is added into the liquid carrier in the form of powder and is mechanically vibrated and dissolved. Such colors can satisfy the demand for almost any specific identification.

Testing reagent: powder phenolphthalein testing reagent for tests, which displays a purplish red color if it encounters a strong alkaline. Of course, the thymol phenolphthalein indicator can also be used. Mix and mechanically vibrate it. Other acid alkali indicators can also be used.

Micro labels: Micro labels with preset codes can be added, or micro labels specially required by a customer can also be added. Do not mix with carrier solvents, but keep them in a suspended liquid. Due to gravity, when the carrier liquid is static, they will precipitate. For example, for a use volume with each 25 g of liquid, 1 g of micro label can be used.

In addition, a label can be bonded to an item to determine the accurate and comprehensive information on such a labeled item through comprehensive determination of the information on a label / or on an item itself. For example, an item may concurrently include a dominant bar code identification label (visible, affixed or printed on the exterior surface of the item), and concurrently include a dormant element label characteristic (the element is hidden inside the material of the item, therefore, it is invisible and dormant). During a test, identification can only be passed if both characteristics are met. A counterfeit item can only forge the dominant label but cannot forge the dormant label.

Based on one aspect of the present invention, the aforementioned process of the present invention can be configured as an automated allocation process. As described above, the database system (such as in the K - MAC - Lab subsystem database of the K - MAC system of the K - MAC database, which will be described in greater detail below) stores a large number of formulas for various materials and conditions. Formula selection can use the automated method of automatic generation and recording in the database. For example, one random formula selection scheme is: the database system (such as in the K - MAC - Lab subsystem in the K - MAC system, which will be described in greater detail below) extracts an existing formula in a random manner. For example, the database will add the conditions based on the materials of a specific product and generate more than one, for example, more than 5 formulas as optional items, and then generate a random from 1 to 5 as the formula number for selection. Subsequently, monitored and commanded by the database system and based on the formula selected, the sub-formula at each step is respectively sent to the system devices and production personnel at different sites for their control and use. At the same time, without going through actual measurement, the database can obtain and store the data on the labels of the items made through calculations or combinations. The security of the confidential information of a customer can be thus guaranteed. Since S - DNA element labels are made and completed through many enclosed and independent production steps, that is, during the synthesis of S - DNA element labels, important information such as the customer's identity, element label formula ingredients and the mix of the label liquid and carrier, etc., are separately mastered by system devices and production personnel from different sites based on the pre-arrangements made by the database, only the central database controls the final formula. During the synthesis of S - DNA element labels, many special software is needed for processing and such software can only be configured in the central database. Access to the software will require a series of passwords, and the passwords can only be used by the identification personnel. The central element label synthesis network that operates the special software is independent and not networked to the administrative and sales department or the Internet. Non production and management personnel have no authority to approach the production areas or their computer networks.

Further, for the process of labeling a large number of goods, an automated assembly line may be configured, whereby a database system centrally manages and commands operations at each process step. From here, the use of the database not only facilitates management and adds to the convenience, but also due to the fact that no one knows the formula selected by the database, a "paper recorded" formula does not exist or is not needed, thereby adding to the confidentiality and security of the formula information.

In addition, regarding the security management of the formula information, to prevent extra element labels through the human or non-human factor, the database can be aided by the most advanced quantified formula technology. The so-called quantified formula technology means that according to the user's requirement, after determining the production volume of products to which a certain S - DNA element label needs to be added, the S - DNA element label allocated will have a rated security value, which can be calculated by the database and then the appropriate allocated materials are distributed to system devices and production personnel at different sites. As soon as production of products is increased artificially without authorization, the element label will be diluted as a result, thus changing the security ratio value of the formula and causing the S - DNA element label allocated for such products to become invalidated and fail. This prevents the negative impact resulting from artificial excessive labeling and improves the level of security management.

If an S - DNA element label is stolen or lost through carelessness, the original authorization of the S - DNA element label for which control has been lost can be cancelled by revising the relevant information and the security authorization of the portable detector (which will be described in greater detail below), so that it cannot be read again, thus guaranteeing the security of the S - DNA element label information.

When designing a group of chemical element label components, a optimal scheme of the present invention is to use the benchmark label method for determination. The selection of a benchmark label can set up the contact between the label and the item as well as the owner and carriers proprietary information on the user or user location, etc. For example, commodities of different materials but from the same manufacturer can join one or several element labels as their benchmark label; products sold in the same country and region can join one or several element labels as their benchmark label, etc., which facilitates database management, statistics and calculations. Of course, one or several elements can also be selected as the benchmark label at will. Such a benchmark label can be one or several labeling elements being used. That is to say, elements with atomic numbers exceeding 5 are optimal. Even more optimal are elements with an atomic number exceeding 22 (titanium), which are elements in d sector and f sector of the periodic table. More optimal are elements selected from the 15 chemical elements below: strontium, rubidium, yttrium, cesium, lanthanum, cerium, praseodymium, rubidium, samarium, europium, gadolinium, terbium, dysprosium, erbium and ytterbium. When designing label combinations, for example, include 3 to 6 elements, plus a benchmark label. The volume of other elements in the label components can be subject to the volume of the benchmark label, multiplied by an integer or decimal multiplier. Thus, the formula ratio of various elements is a group of volume ratio. More optimally, it may be a group of integer ratios. Each group of formula ratios has a specific data code. Such a formula ratio design facilitates management and testing. For example, by only selectively reading one of the elements thereof, the property information on such an item or the user in a certain aspect can be given, without reading the entire label. Also, if someone wants to move the label's raw materials (it is impossible to move all raw materials) or the expected concentration level changes due to natural weathering, the volume of certain elements will drop, but the ratio among the elements will remain unchanged.

For example, a unique label can be created by using the 15 elements mentioned above. The benchmark label must exist in them. If the remaining 14 elements are combined according to the standard of 0 to 9, then there may exist:

10¹⁴ - 1 = 99,999,999,999,999 possible unique chemical element labels. In addition with variations in the concentration levels, relative concentration levels and label positions of the elements, the number is so huge that non-repetitive use can be achieved during applications.

Item encoding rules use two or more than two chemical elements from the 15 chemical elements mentioned above as a group for combinations, and formula ratio combinations can be performed by using the even and odd number method.

An item with externally added elements and its own inherent elements may have a large number of elements, thus forming a spectrum of a large number of elements. Based on a optimal embodiment scheme of the present invention, if the X fluorescent spectrum of an item contains the spectra of several (at least more than two) elements, the spectra of the elements can be selectively read through the database, that is, without reading all of the spectra scanned as the data for the label, and only the spectra of some of the elements thereof are selected and stored as the data of the label. When a new definition is needed in the future for the item, in addition to the use of the method to directly change the self defined information, the elements previously preserved on the item can also be encoded as newly selected elements, thus giving the item a new information definition, achieving the effect of repeatedly defining different information depending on different needs at different times after the same item has been labeled once. On the one hand, for a specific application, the volume of calculation for data comparison may be reduced. On the other hand, selective reading of the spectra facilitates security during applications; even if there is anybody who wishes to forge the label of an item, faced with a large number of element labels, he does not know which spectral data the database system will read. In addition, he even has less of a way to forge the testing data, so that he can request certification by the database, because the label data stored in the database cannot be obtained merely by scanning. When selective reading is used, regardless of whether label data is obtained through actual scanning or label data is obtained through database calculations and combinations, the computer can automatically and randomly select or select, according to a certain pattern, the elements to be selected and read. For example, in certain circumstances, only the benchmark label is selected as the element to be read; in more circumstances, other elements, such as one or several elements with the largest atomic numbers, are selected as the elements to be read; or just use random selection altogether. When identification is made, the computer will use the same logic to perform selective reading on the spectra to be measured, thus determining the consistency of the data measured with the label data.

It should be understood that the present invention can use without limitation element atoms as labels, and in addition, it can also use element atoms and molecular chemicals as specific labels. The fluorescent ray being tested is not limited to the fluorescent ray in the X ray waveband, and can also include fluorescent rays in wavebands such as ultraviolet, visible and infrared rays, etc. Regarding the element molecule or molecular chemical and testing principles, they are similar to the principles of X fluorescent testing described above, only that what the spectra reflect is eth characteristic energy level change of the molecular structure, therefore, specific labels existing in the form of appropriate molecules an molecular chemicals can be detected. The present invention can also use nuclear resonance technologies to excite elements, to detect the refined spectral structure of nuclear magnetic moment fission, thus selectively detecting richer label spectra through a combination of multiple spectral structures.

In certain circumstances, as designs of specific labels, the element molecules and molecular chemical in the present invention are very useful. For example, the same carbon element can have different graphite and diamond molecular structures. This increases the number of codes for different molecular structures of the same element and increases the flexibility of encoding by a combination of molecules or atomic labels. For example, items of the same type or with the same use can use the label characteristics of the same element atoms, and further, more detailed definitions of different of types or uses use the label characteristics of different molecular forms of the same element.

### Label information detection and analysis technology

See Fig. 1. When an item needs to be detected to determine whether it is a labeled item, use an excitation source (for example, X ray 11 emitted by X ray emitter 101) to scan the item to be detected. The detector of the X fluorescent detector detects the X fluorescence emitted by the chemical element label and converts it into detection data through AD. Use said detected data for comparison with the label data stored in database 104 and determine whether the item being detected is a labeled item or not a labeled item based on whether two are identical. If it is a labeled item, then the information needed on the item can be obtained through the database. Technicians in the present field can understand that the aforementioned principle for determining whether the two pieces of data are identical refer to the fact that the two pieces of data are identical or their differences falls within the allowable range. Corresponding to the process of item definition labeling, the digital signal of the X fluorescent spectrum detected can be further encoded into various encoded data, for example, to generate information containing an element, information on element concentration level, information on element concentration level ratio, formula information and the so-called fingerprint data on item information. Transmit such fingerprint data for comparison with the data stored in database 104 in advance. Such encoded or unencoded data is collectively referred to herein as "detection data."

The detection device in the present invention is mainly an X fluorescent detection device or an X fluorescent detector, referred herein as the X fluorescent detector. The X fluorescent detector can travel through an ordinary packaging and validate the element label information on item identity without damaging the packaging of the item. In the use of a complete system of the present invention, one or several the X fluorescent detectors of any number can be included.

The X fluorescent detector illustrated in Fig. 1 includes:

As an excitation source, X ray emitter 101 is used to emit laser beam 11 at the item with label 100 to facilitate scanning of the item. Technicians in the present field can understand that although the excitation source used by the X fluorescent detector in the illustrated embodiment is an X ray emitter, the excitation source is not limited to the X ray emitter, and can be an X ray, γ ray, α ray and electronic beam or their various combinations, etc., as long as bombing the element label causes triggers any energy emission device to emit X fluorescence. In one embodiment, the excitation source can be a continuously adjustable or range adjustable frequency conversion electromagnetic radiation tube, with a frequency coverage that may include the X ray waveband and ultraviolet, visible and infrared areas with a longer wavelength, thus constituting an X fluorescent detector in a broad sense (that is, it not only excites and detects the label's X ray, but also excites and detects radiation in the ultraviolet, visible and infrared areas). Through such an excitation source that can excite ultraviolet, visible and infrared radiation, the aforementioned specific label that exists in the form of an element atom or molecular chemical can be concurrently or individually excited. In addition to the various light excitation sources mentioned above, the present invention can also concurrently apply magnetic field excitation sources concurrently on an item through application of a current coil or permanent magnet to excite the refined nuclear resonance spectra of an element. The nuclear resonance spectra also represent the characteristic spectra of an element, thus making it possible to selectively detect a richer label spectrum. All of such characteristics have been included in the considerations of the present invention. If an X ray emitter is used as an excitation source, then it can be, for example, an emission source type excitation source comprising radioactive isotopes supported by a collimating and guidance device, or can be an exciter known in the present field, such as a singe color X beam exciter comprising an X ray tube and a filter system.

X fluorescent detector 102 is used to receive X fluorescent ray 12 sent from the label and through AD conversion, converts it into a digital signal (detection data) that is sent to data processing and analysis device 103 through interface 23. When the aforementioned specific label that exists in the form of an element atom or molecular chemical is concurrently or individually excited, X fluorescent detector 102 can also receive fluorescence from ultraviolet, visible and infrared areas, convert it into an electric signal and send it to data processing and analysis device 103. The fluorescent detector can be, for example, a proportional counter tube, a multiwire proportional counter tube and a Si PiN diode, etc.

Although data processing and analysis device 103 is illustrated as a PDA (personal digital assistant, which can include a data processing unit, a data memory unit (such as ROM and RAM), a data emitting unit and a data receiving unit), technicians in the present field can understand that it can be any computation processing device with communications abilities, such as various types of PDAs, palmtops and cell phones (such as the iPAQ smart cell phones of HP), etc. Following will mainly use a PDA by way of illustration as an example. Software achieving its various functions is stored on said data processing and analysis device. Generally, the data processing and analysis device always includes a database, which is called a terminal database in the system of the present invention. Data regarding the label of the item to be detected may already be stored on the terminal database of data processing and analysis device 103. Thus, after the measurement result sent from X fluorescent detector 102 is received, a comparison is directly made with the label data stored, and detailed information relating to the customer and the item is accessed from the database for a reading. The X fluorescent detector can be connected to a local database, a remote central database and / or another terminal database of the X fluorescent detector in a wired / wireless manner (an explanation will be provided in greater detail below), thus, with authorization, from a local database and / or remote database, label data that does not exist in its own terminal database is downloaded and accessed, for use in on site measurement and identification. Data and information on on site measurement can also be stored in the terminal database, or uploaded to a local database, a remote central database and / or another terminal database of the X fluorescent detector in a wired / wireless manner, for mutually updating data in a timely manner. In one embodiment, to facilitate use, the X fluorescent detector can be connected to the network of one's organization wirelessly (WEP) and later be connected through the Internet or a local database and remote central database. In addition, the X fluorescent detector can also selectively include devices that facilitate vision or touch sensing devices such as an indicator, a sound generator or vibrator, etc. For example, when an X fluorescent detector is used, an item that has been labeled by an S - DNA element can cause the green light on the housing of the detector to be lit and give off a "beeping" sound or generate a vibration, whereas when an item not labeled by such an element is detected, only the red light on the detector will flash.

In one aspect of the present invention, the X fluorescent detector has an authorized controller and / or tracking unit, positioning unit and remote control unit (which can be collectively called management units. For example, all of them can be placed on the data processing and analysis device or placed in other fixed positions on the device body), for control of the X fluorescent detector itself or other X fluorescent detector authorization or cancellation of authorization, etc. Authorization can also be achieved through a local turn-on password or biological sensor (such as a fingerprint sensor), or a remote control terminal may exercise authorization or authorization control cancellation. By managing the tracking unit, positioning unit and / or remote control unit, the remote control terminal may manage track, position and / or remote control any X fluorescent detector real time (in the database section, a more detailed explanation will be provided).

In a typical embodiment of the present invention, the X fluorescent detector is made compact and portable (with a maximum length of 30 cm and a weight that does not exceed 1.6 kg), making it possible for on site detection. This can be achieved under the present technical conditions. A light and compact X fluorescent detector that can be handheld is easy to use on site. In the past, it would take several days to complete the analysis and test result after taking them back to the laboratory, whereas after a portable X fluorescent detector is used, the process takes only a few seconds to complete on site, as if there is a "portable laboratory." The portable design of the X fluorescent detector plus the wireless transmission and the ability to communicate with a local or central database makes it possible to perform detection work on site in real time, thus constituting a system that is most convenient, reliable for validation, detection, certification and management at present.

In a portable X fluorescent detector designed by the applicant, the exciter source X ray emitter uses a silver or tungsten positive pole, 10 - 40 kV, 10 - 50 µA, with 5 layers of filter devices. The detector uses an Si PiN diode detector: <230 Evfwhm 5.95 keV Mn Kα ray. Temperature range: -10 °C to + 50 °C. The power supply is a Li-on rechargeable battery (including a battery charger), and can concurrently recharge the PDA. The PDA processor is Intel 400 MHz, with Microsoft Windows CE operating system. For data storage, a 128 Mb memory can store 20,000 results. A 1 Gb memory can store 100,000 results. The display is a color touch screen with high resolution. Said PDA also has a reception and emitting device based on GPS positioning, to facilitate its positioning and tracking by a remote database. The PDA with a terminal database can use GPRS / CDMA / GSM for networking or use WiFi / Bluetooth for networking. Use one of the methods based on this to connect to the Internet to access the database network (such as K - MAC network) to achieve wireless transmission and mobile reading and wireless transmission of data or fingerprint data real time. The transmitted data can be less than about 20K in size. Using the above methods, data transmissions can all be completed in 3 seconds, sufficient to fulfill the requirement of real time reading.

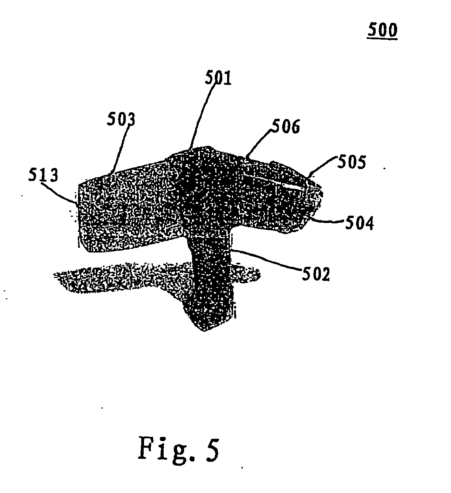

The exterior of said X fluorescent detector is shown in Fig. 5. It has an instrument body 501; a handle 502 integral to the machine body, on which a start switch can be placed. Said switch an be for example a fingerprint sensor, thus controlling the authorized use of the entire detector; in detector head 503, an X ray emitter and X fluorescent detector with the above specifications are installed. During use, tip 513 in the head vertically approaches or comes into contact with the surface of the item being detected or the surface of a specific position. That is, execute the emission and scanning of the excitation source by aiming it at the item being detected. At the same time, the X fluorescent detector receives the X fluorescence emitted by the item; as an alternative, when the surface of the item also includes a dominant identification characteristic such as a bar code, bar code reading may also be include in head 503 at the same time. As an alternative, the present invention may also concurrently integrate and include multiple readers inside the head or machine body, such as a bar code reader, a contact type IC card reader, an RFID reader, a magnetic card reader, a 2D code reader and a biological reader, etc., thus integrating the applications of multiple technologies on one machine; the machine body also includes a tail 504, on which card slot 505 is placed, for use with insertion into data processing and analysis device 506 (PDA). Data processing and analysis device 506 is connected to the X fluorescent detector through an interface on card slot 505 and receives and analyzes data converted from the spectra detected by the X fluorescent detector, in order to make a determination or transmit data two way to the database through a network.

Apart from data processing and analysis device 506, the remaining parts of the X fluorescent detector can be integrated into a whole. That is, data processing and analysis device 506 can be designed as a detachable PDA, thus forming a detached, portable device. The advantage of a detachable design is that different purpose PDA's can be replaced and inserted (that is, including different types of databases), or it is suitable for insertion of multiple types of data processing and analysis device 506. For example, card slot 505 can be designed into an overlapped card area shape, thus becoming suitable for insertion of PDAs or cell phones with multiple volumes and exterior specifications. The advantage of a detachable design is also that the parts of the X fluorescent detector apart from data processing and analysis device 506 can be used to build a universal X fluorescent detection platform (for placement, for example, in a large public place such as a supermarket), whereas once a common PDA or cell phone used by an individual is inserted into the embedded card slot of an X fluorescent detector placed at a shopping mall, information downloaded through reception from a local or remote database can instantly become a device with detection "intelligence."

Of course, the X fluorescent detector can also be totally designed as an overall portable device that integrates all of the parts above (including data processing and analysis device 506) into a whole. Also, it can be understood that when, for example, a universal X fluorescent detection is built, such an X fluorescent detection platform may not be in the form of a portable machine and may be in the form of a desktop or vertical terminal.

In one embodiment, use different X fluorescent detectors of the same organization to interconnect to each other through wired and / or wireless manner. From the first location, use a level 1 detector to send data to a level 2 detector at a second location. Therefore, at the first location, the level 1 detector can be used for a preliminary determination, and at the second location, the level 2 detector can be used to make a further determination.

In one embodiment, to facilitate the chemical element labeling of a certain item, fingerprint data including name list of the material and the labeled element (which can be the formula ratio of various labeling elements or data obtained on the above formula ratio or after data is encoded again) can be stored in the terminal database of the X fluorescent detector. Therefore, during the use of the X fluorescent detector, determine the existence of the chemical element label S - DNA. The analytical software in the X fluorescent detector will read the data on the labeling element of the substance being detected. Therefore, when the detector receives data by detecting the S - DNA signal output, such data received is already compared with the data stored in the database to determine whether said item is a labeled item or not a labeled item.

In one embodiment, use different X fluorescent detector, data output from the X fluorescent detector can be directly compared with data stored in the terminal database of the data processing and analysis device, thus making it possible to make an immediate determination and give information on the item. In another embodiment, data output from the X fluorescent detector is transmitted to a remote database (such as a data center) for comparison with the data stored therein, and the remote database sends back information related to the item which is used to make a determination. The two results look the same o the user. The user does not feel what the data calculation or validation process is like. However, in reality, in the latter method, the remote database (a data center) can use a cluster system and distributed computation to perform data processing, which effectively uses computer resources, improves calculation accuracy and performance and reduces the time required for detection. This is because if there is a large amount of calculation, it may be hard for the terminal database on the X fluorescent detector to undertake a huge calculation task. In addition, after all, the terminal database has a limited capacity, whereas the capacity of the remote database is "unlimited." From here, the calculation task and storage task can be shifted from the terminal database to a remote data center, whereas the user feels that the terminal database on the detector has an "unlimited" capacity and that its calculation speed is so fast. This impossible to achieve in prior art that does not have the database system in the present invention. Therefore the latter method is a optimal method in the present invention (there will be a further explanation in the database section).

When mutual data transmission is needed through connection with a local or remote database to make a determination and obtain information, based on one embodiment, the data processing and analysis device can convert the data output received by the X fluorescent detector into a standard or non standard code data form, such as the spectrum shown in Fig. 2. Different elements are at the only positions on a horizontal axis (X axis direction) where they can be identified, thus being allocated an exclusive value or character for each of them. The information on different concentration levels indicated by each element on the vertical axis (Y axis direction) can be assigned a different value or character, thus forming the 2D symbol codes for various data matrix symbols or the corresponding ASCII codes according to certain rules based on a position combination relationship. The data processing and analysis device will convert the direct spectral data output into data output of codes, and then transmit the data to and from a local or remote database in a wired or wireless manner. The advantage is that the output expression of the X fluorescence can be standardized. A code transmission database where standardization has been created, for example, a database where a certain 2D code transmission and logic relationship has been created, can be used directly, instead of asking an existing database to know or "learn" the method of how to "translate" spectral data output into data codes it knows on its own. Of course, the data processing and analysis device can fully and directly transmit the data output received (for example, after encryption) to and from a local or remote database. A summary description has been given of the X fluorescent detection device, but technicians in the present field can understand that the X fluorescent detector can also constitute multiple, flexible design schemes, thus facilitating multiple purposes and uses.

For example, to facilitate the use of the X fluorescent detector on a large scale, the X fluorescent detector may use the embedded scheme, including a plate level scheme, a modular scheme and further including a chip level scheme. For example, constitute in a desktop or vertical machine shape and use RAM or ROM to store fingerprint data, whereas the analysis and processing program is fixed on the ROM. At the same time, an abundance of peripheral allocation interfaces are provided, such as communications interfaces like smart cards / Bluetooth, etc. At the same time, provide programs that operate on various smart devices to facilitate use on devices such as cell phones. For example, a solution of direct chip level provision may be used. Integrate and package a ROM chip and a RAM chip with DSP and analysis and processing programs affixed thereon into one EPGA chip. Said chip can fulfill all of the universal device functions mentioned above. When the sensor portion of a reader is made into an external universal device, it can also provide an abundance of peripheral allocation interfaces for interconnection with other devices, such as X ray, later, infrared and ultraviolet, etc.

### Database and network technologies

The methods and systems in the present invention can form compete solutions during the labeling and detection processes of an item, and its important characteristic is that it has a database system used for safety and management.

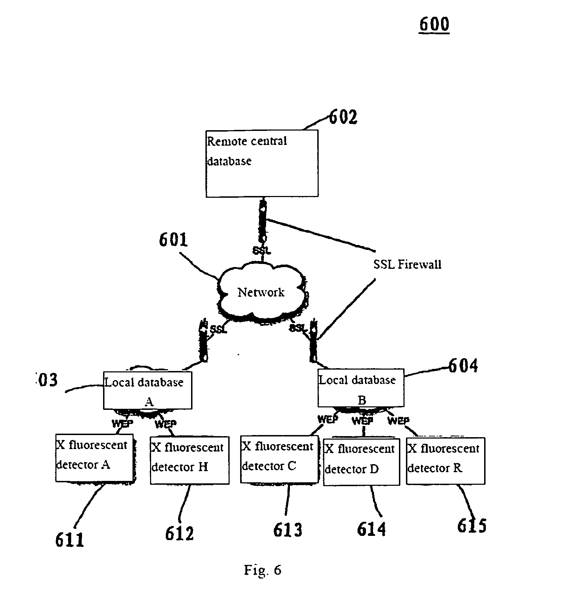

A typical system framework 600 is shown in Fig. 6. System 600 includes a central database, which can be called remote central database 602, local databases 603 and 604 and central database 602 can be respectively placed on a local terminal and a remote terminal, or we can say that each database is a system that includes software and its related hardware and has management functions such as data processing and control, etc. The local databases and / or the central database can track, position and remotely control detectors 611 - 615 performing a detections or an item being labeled through existing tracking and positioning technologies. In addition, authorization control may also be exercised through different X fluorescent detectors. A terminal database is placed on each detector 611 - 615. Said database stores information on the user and item needed by the site, or may not store such information, which can be accessed from other databases when needed. Network 601 can be a publicly accessible communications network (such as the Internet) or a dedicated network or a mixed network that includes a public and a dedicated portion, a wireless communications network and / or data communications network and can support data transmission and sharing among multiple networks (such as CDMA and GSM). Although Fig. 6 shows two local databases and 5 detectors that are respectively linked up with the two local databases wirelessly. But technicians in the present field can understand that this is not a necessary limitation. Actually, there may be more or fewer detectors linked up with local databases. The detectors can also be linked up with the local databases in a wired manner, or connected through local area networks and the Internet. Technicians in the present field can understand also that the system in the present invention can also comprise one or several detectors. That is, the local database acts as the central database of the entire system, without being further connected to other databases.

As described above, in addition to having an excitation source and a fluorescent detector, the X fluorescent detector also has a data processing and analysis device. Said data processing and analysis device is, for example, a PDA or any other type of mobile, handheld and / or computing device. A typical data processing and analysis device includes a data processing unit, a data storage unit, a unit emission device, a data reception unit and a display unit. The terminal database described above exists within the data processing and analysis device. The X fluorescent detector is connected is connected to the local database, central database and / or the terminal databases of other X fluorescent detectors in a wired / wireless manner. For example, the PDA in the detector shown in Fig. 5 can use GPRS / CDMA for networking, or it can be networked using WiFi / Bluetooth. It can use one of the methods based on the ones described above for connection to the Internet, thus accessing the network for communications with other databases, transmitting data wirelessly and transmitting result data and information, etc.

In a design that specifically uses GPRS technology to achieve access of a PDA to the Internet, add a GPRS networking device on the PDA. When data transmission is needed over a long distance, first, use a GPRS modem to dial up for access to the Internet; then, the PDA will be automatically connected to the database network; after the database network successfully authenticates the identification information of the PDA, it will create an encrypted transmission path to the PDA; finally, data transmission begins. Here, the PDA can use a GPRS device that supports the CF card interface, a Bluetooth GPRS device and a wired (such as by USB) GPRS device.

The local database is connected to the central database through networking and data can be mutually updated in a timely manner. To facilitate use, the detector can be connected to the network of one's organization wirelessly (WEP) and later be connected through the Internet or a local database and remote central database. Different detectors of the same organization can also be connected to each other in a wired and / or wirelessly manner (point to point network). For example, from the first location, use a level 1 detector to send data to a level 2 detector at the second location. Therefore, use a level 1 detector at the first location to make a preliminary determination, and then later use a level 2 detector at the second location to make a further determination.

Based on one aspect of the present invention, information data regarding customers and items can be created in the databases at each level of the database network. Thus, when a confirmation is made that an item being detected is a labeled item, such information data can be opened to obtain more relevant information. For example, when an S - DNA element label is being synthesized, an element code is automatically generated; the identity material and information on the item being labeled can be prepared and completed by customization at a later stage and can be stored in the central database in its entirety. For example, it can include customized information such as item property, characteristics and ownership, etc. With greater detail, it can also include one or several of the items below: label: the characteristic code of the item; SKU (stock keeping unit): the item code of the item, which is similar to a bar code; product description: the name of the item; date of production: date of production of the item; batch number of the item; the batch number of the item produced; manufacturer: the production manufacturer; customer: customers that may require item detection; notes; routine notes on an item, etc.

In addition to the above static information, based on specific uses, "dynamic" information on items or item holders an also be included. For example, the time information on the access by a holder of an item (such as a parking permit) to a detected location and time interval information can also be included, thus making it possible to calculate the appropriate fees, etc.

In summary, the aforementioned information data includes one or several combinations below: information used to identify the identity of an item or the holder of the item, information used for management of an item or the holder of the item, and other customized information that is continuously added to, deleted from and changed in the database after labeling, thus facilitating, based on the specific data needed for an item and used by the holder, customization of any type and content of information that is related to the item. Such information can be stored in databases at various levels concurrently or in a tiered manner, to facilitate mutual access and use.

Based on one aspect of the present invention, for the local databases and remote central database, the following is also included: data transmission between the X fluorescent detector and the local databases and remote central database through a wired and / or wireless manner. For example, through communications networks such as a wireless network, the internet or local area network, the X fluorescent detector transmits detection data, etc., to the local databases and remote central database. The local databases and remote central database then transmit the result data to such an X fluorescent detector. The result data not only includes a simple determination of "yes" or "no" type about whether the data measured matches the stored data in the databases, which is information used to determine whether an item is a labeled item, more importantly, it may also include the aforementioned various static or dynamic information related to the detected item (if there is a match), thus making a disposition based on different applications. Regarding this point, the X fluorescent detector also downloads all data and information needed from the databases and updates and verifies it in a timely manner, to ensure data synchronization. Therefore, technicians in the present field can understand that each level of the databases in the present invention can have a comparison unit used for data comparison, a data storage unit, a data emission unit and a data reception unit. An authorization unit and an encryption unit may also be set up for data encryption. Said data includes various types of data, including spectral data and encoding data, etc. Said data can be stored in the databases after authorization and encryption, or compared with the data in the databases after authorization and encryption.

Based on one aspect of the present invention, after the user completes detection work, he can download the detection result to a dedicated computer, and at the same time, transmit such detection information to databases at various levels. The central database provides the senior administrator with an electronic report that includes on site monitoring and verification procedures. Thereafter, the report will be summarized on a daily basis and forwarded to the departments designated by the user or other designated departments.

Based on one aspect of the present invention, data in a database can be encrypted data. In such circumstances, prior to comparison, data detected also needs to be encrypted and computed. In one embodiment (such as in a K - MAC system system [sic]), data used in a database and PDA goes through 3 - DES encryption algorithm. Fingerprint data is first encrypted with the 3 - DES encryption algorithm in a database network (such as the K - MAC network). The encrypted data is stored in a database. After authorization, the PDA can access a specific data area of the fingerprint database of the database network (such as the K - MAC network). Then, the fingerprint data needed is downloaded into its random memory through an encryption path. The decryption program in the PDA will only perform data decryption work when fingerprint data is needed. The decrypted data is directly provided to an analytical program and will not be stored in any file form. Thus, even if the labeling element and its content are known, if the encryption method is not known, it is still impossible to obtain the appropriate certification for the qualified item from the secure database. The encryption process can also be completed through the PDA on the X fluorescent detector.

The data transmission in the present invention can use non standard or industrial standard protection technologies, such as password protection and SSL (secure socket layer) technologies, to protect the security and reliability of various steps and processes in data preservation and data transmission. In the illustrative example shown in Fig. 6, the application of SSL protection technology and network firewall protection technology are shown.

Based on one aspect of the present invention, for reasons of confidentiality, security and legitimacy, a local database and / or remote central database can perform management, tracking, positioning and remote control, etc., on an X fluorescent detector used for identification and / or a labeled item through management, tracking and positioning technologies. For example, a remote control central database and / or local database controls whether a certain X fluorescent detector is allowed to work or develop or limit its work authority or authorize it to perform a certain job, thus being able to effectively control the loss or abuse of an X fluorescent detector. For example, to achieve authorization, when an X fluorescent detector is turned on, it sends an authorization request to its terminal database or local database or remote central database, due to a positive aspect caused by the flexible placement of the databases in the present invention, authorization of a detector can be controlled in a database at any level. For example, a terminal database can, based on a comparison of the fingerprint pattern data of the user sent by the biological sensor that comes with the switch itself of the X fluorescent detector (such as a fingerprint sensor) with the valid finger print pattern data in the terminal database, the terminal database can immediately make a determination of granting or not granting authorization. When there is a positive determination, the start program is activated. When there is a negative determination, information such as "you have not been granted authorization" will be displayed on the display. When authorization is controlled by a remote database, in addition to making a determination on the fingerprint pattern of the requestor, it can concurrently implement tracking and positioning of said detector, to determine whether the requestor is using it in a legitimate usage area and decide whether to grant authorization as well as the limit of the authorized work. In one embodiment, when the system grants authorization to a user, the system can instantly obtain the user's name and number, whereas an illegitimate user will not be able to continue to operate the system. By scanning and detecting an item, the system will obtain information that can be converted into the names of the trademark user and the trademark. At this time, files stored on the system already include information related to the detection time, detection personnel and the detected item. In some embodiments, the remote database can also decide whether to process or not to process data received by making a determination of the geographic location where the sender is located based on the fingerprint data received each time and by making a comparison of the fingerprint pattern data transmitted therewith. In a typical embodiment, the database system uses a pattern of granting authorization at different levels. X fluorescent detectors with different levels of authority can only read data and information within the scope of their authorization. For example, in some embodiments, the database allows certain information on a detected item to be displayed to a specific user (for example determined based on fingerprints) or to a specific detector (for example based on the detector number sent in), and some information is now shown to a specific user or a specific detector.

In a specific embodiment, a local or remote database can grant authorization for access together with a PDA using a 128 bit symmetrical secret key system. The database network (such as K - MAC network) generates a unique pair of secret keys for each detector, and provides one of the keys thereof to a PDA for storage in its read only memory; with its secret key, the PDA receives authorization in the database network (such as K - MAC network) to access internal resources. The remote database or local database can also temporarily or permanently cancel authorization by a certain detector or a certain user. For example, as soon as a PDA is stolen, lost or encounters any uncontrollable condition, authorization granted to this PDA can be used by simply invalidating the corresponding secret key in the database network (such as K - MAC network). If reauthorization is needed for a PDA, the database network (such as K - MAC network) needs to generate a pair of new secret keys for that PDA and update the secret key in the read only memory of the PDA.

In addition, in some embodiments, authorization can also be controlled with a similar method through control of the PDAs of different X fluorescent detectors, because different X fluorescent detectors can also be interconnected and transmit data to each other in wired or wireless manner.

In terms of tracking and positioning, the local database and / or remote central database can implement the positioning of a detector or labeled item based on the data or signal received. The present invention mainly uses the DGPS + GSM + GPRS / CDMA method.

GPS, that is, the global positioning system, is a mid distance, round orbit satellite positioning system that can provide the overwhelming majority of areas on the surface of the earth with accurate positioning and highly precise time benchmark. The system is fulfilled by 24 GPS satellites in space. A minimum of 3 satellites thereof is needed to quickly determine a target object on the earth. The greater the number of satellites that can be received, the more precise the position decoded is. The system currently is divided into two types: military and civilian. The precision of civilian signals is about 100 m; and the precision of the military signals is under 10 m. to improve the precision of the civilian version, the tracking and positioning technologies of the present invention use the differential global positioning system, abbreviated as DGPS, that is, known reference points of coordinates (measured by other means) nearby are used to correct errors of the GPS, and then such a real time error value is added to considerations of the computations of the coordinates themselves, to obtain a more precise value.

GSM positioning technology (TOA / E - OTD / A - GPS), which mainly uses the A - GPS method. The principles of A - GPS: the GPS auxiliary positioning method accomplishes the following steps: the GSM network receives auxiliary GPS information; the GSM network sends the auxiliary information to a cell phone; the cell phone obtains the GPS information, calculates and obtains its own precise position; the cell phone sends the position information to the GSM network. The methods are divided into two methods: cell phone aided method and cell phone independent method: (1) The cell phone aided GPS positioning method: such a solution is achieved by transferring most of the functions of a traditional GPS receiver to a network processor. Said method requires devices such as antennas, an RF unit and data processors, etc. The GSM network sends a series of extremely short auxiliary information to a cell phone, including time, a list of satellites viewable, satellite signal Doppler parameters and the code phase search window. Such parameters help the built in GPS module reduce the GPS signal acquisition time. After auxiliary data is processed by the GPS module from the cell phone, a pseudo distance is generated which may last several minutes. After such pseudo distance data is received, the appropriate network processor or positioning server can roughly calculate the position of the cell phone. After the GSM network adds necessary corrections, the positioning precision can be improved. (2) Cell phone's independent GPS positioning method: such a cell phone includes a full featured GPS receiver, which has all the features of the cell phone in (1), with additional satellite position and cell phone position calculation features. When computing begins, the data needed exceeds the cell phone's auxiliary means. Such data can last more than 4 hours or be updated according to need, and normally includes time, reference positions, satellite calendar and time calibration parameters, etc. If some applications require a higher precision, then differential GPS (DGPS) signals must be continuously sent (at an interval of about 30 s) to the cell phone. DGPS signals are effective in a very broad geographic area, where one reference receiver can serve a broader geographic area when used as a center. The final position information is obtained by the cell phone itself through its own calculations. If needed, such positioning information can be sent to any other application. Data is sent by GPRS / CDMA. Technicians in the present field can understand that various positioning principles and methods currently existing or coming in the future are within the considerations by the present invention.

Following is a description of a specific database embodiment developed by the applicant (K - MAC data and information management system).

The K - MAC data and information management system can store all element label information on an item and inquires about, accesses, prepares statistics on, analyses and manages such information. The K - MAC data and information management system organically combines the element label synthesis system with the smart analysis and certification system, thus forming a complete system to achieve multiple functions of defining, storing, managing, certifying, identifying and giving feedback on item label information.

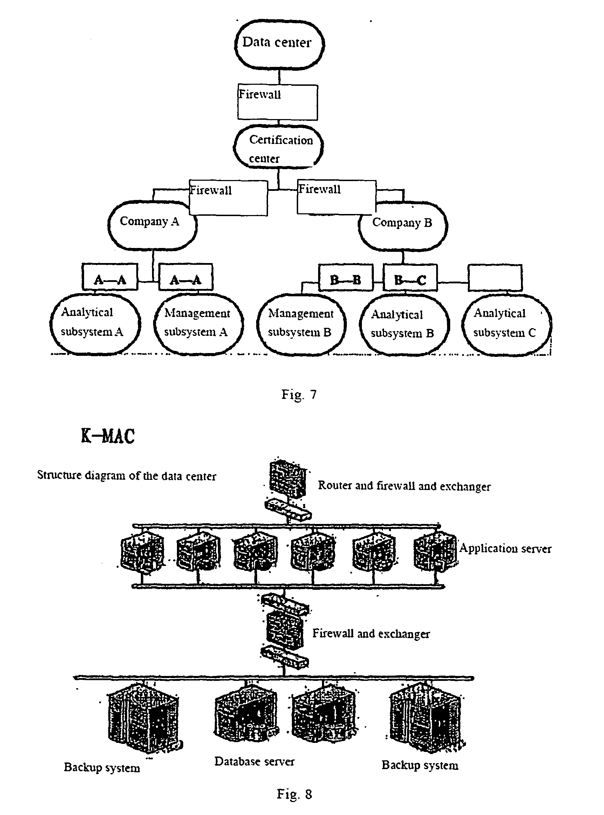

The K - MAC system is a system that uses the Unix computer cluster and distributed grid calculations. Its basic configuration can still be summarized by Fig. 6. For a more specific configuration of the system, see Fig. 7. As shown in the figure, the K - MAC data and information management system comprises jointly a data center, a certification center and a remote analysis / certification system, wherein the data center and the certification center are basically tantamount to remote database 602 in Fig. 6. The K - MAC system provides an integration of the networks commonly used currently, such as Ethernet, wireless Ethernet and optic fiber networks, etc, with modern enterprise systems. The figure shows a local databases represented by the local area networks of Company A and Company B. Analytical subsystem A, analytical subsystem B and analytical subsystem C respectively resent Company A, and at Company B, the terminal database of detectors 611 - 615 implement different detection tasks. What the system currently uses is just the detector shown in Fig. 5.

A central structural drawing of the datacenter is shown in Fig. 8. The central database has two backup systems, which are connected to a group of servers after being configured with a firewall and an exchanger, and which are then are connected to the external network through a router and firewall and exchanger.

To adapt to the applications in the present invention, balance the storage space with calculation performance, improve calculation performance as much as possible and meet high reliability requirements, the system has the following characteristics:

### 1. Information point sampling

The system uses a dedicated ADC (analog to digital converter) to perform analog to digital conversion on the X fluorescence fed back, receive the digital data on the energy spectrum and then send the preliminarily obtained data to the computer through a computer communications interface for analysis and processing

### 2. Data analysis

The computer first processes the data sent over for persistence by means of remote communications and stores it on the memory media of the computer at the data center. Next, the computer at the data center is responsible for making a comparison with the fingerprint data, obtaining the target data and the similarity index of the source data, and based on such similarity index, determine the conformity of the item, before finally sending the conformity back to the terminal processing program.

### 3. Remote communications and remote control

A computer device directly connected to a detector through a cable has a high scalability (such as a PDA riding on a portable detector), and communicates with a remote computer or computer proxy through its remote communications modules (WiFi, Bluetooth and GPRS). The remote computer can remotely control the turning on /shutdown, authorization, activation / invalidation of the detector through the remote communications module and track the status and position of the detector in real time.

### 4. Distributed calculations

The computer at the data center uses cluster systems and distributed calculations to process the data returned by the detector. The cluster systems are interconnected to each other through networking and share computing resources. In a cluster system connected with a high speed network, the main control node divides the result data of one test into several data blocks (one data block is one calculation task and one data block includes the element data within a range). At this time, the main control node distributes the calculation task dynamics to the surrounding calculation nodes for calculation, to guarantee that various calculation nodes fully use the computing resources to analyze and process the data. After completing the calculations, the calculation nodes return the result to the main control node. The main control node sorts out the calculation result and is responsible for processing the result data. If a repetitive calculation is needed, repeat the above action until a conclusion is made. For calculations of a test may require many trips back and forth between the main control node and the calculation nodes for calculations and sorting, in order to improve the precision of calculations and obtain a conclusion with a lower error. The present system effectively uses computer resources, improves the precision and performance of calculations and reduces the test time.

### 5. Grid storage

The random accessibility of data is quite high and the size of individual data is limited. But the overall data volume is quite huge. The data transmitted each time needs to be processed for persistence, which requires a huge data storage space. The present system uses the grid storage system to physically cut up and centrally manage the storage space. While guaranteeing the maintainability of data, the expansion of space becomes simple and secure. A grid data system can separately expand computing performance and storage performance, in order to meet the precision requirement for comparison of the test data.

From the perspective of applications, the K - MAC system can be divided into three subsystems:

The K - MAC - Lab is a subsystem of the K - MAC system and used in the synthesis, storage and transportation of an element label. For example, said subsystem stores a large amount of known formulas and corresponding data and can automatically generate the label formulas of items under various conditions and store the corresponding data by means of calculations and combinations. It can also selectively read and memorize the data measured. In conditions of automated assembly lines, the assembly work of the fulfillment of the automated formula generation and label addition to a large number of items is completed with such a subsystem. K - MAC - Lab is operated at the data center and is independent of any office local area network and the Internet by means of rigorous physical isolation and monitoring to prevent the disclosure of secrets.

The K - MAC - CS is a subsystem of the K - MAC system and used for management of products that already use element labels. K - MAC - CS is operated at the data center and is independent of any company and office local area network. It uses the Internet to set up VPN and by using multiple encrypted transmission protocols such as SSL and Kerberos, etc., it guarantees the security and reliability of information transmission on networks.

The K - MAC - Web is a web management subsystem of the K - MAC system and used to manage business related to the use of element label through the Internet. The use of K - MAC - Web enables the user to achieve remote monitoring, control and management at any location on the Internet. K - MAC - Web is operated at the data center, is connected to the Internet and guarantees system security by using a hardware network firewall and intrusion detection system.

The K - MAC system uses a role allocation system. It can be customized for each user. Such a system guarantees an exclusive authority for each user to enter its work area, and menus and areas that exceed their work authority will not be displayed. Before entering the system, the user needs to enter a user name, password and confirmation code. The K - MAC data and information management system crease an access menu structure for each user based on such information, thus providing the user with the best security and flexibility.

Such a data system can implement various functions described above. For example, when an element label is synthesized, an element code is automatically generated; the identity material and information on the labeled item can be prepared and completed through customization at a later stage and be stored at the data center in its entirety. A smart portable analysis and certification system (that is, the detector and its terminal database shown in Fig. 5) can download the required data and information from various data centers and update and verify it in a timely manner to ensure data synchronization. The data and information management system uses a tiered authorization mode, whereby the smart portable analysis and certification systems with different authorities can only read the data and material within the scope of the authorizations. For brevity, a detailed description in this respect will not be repeated here.

Following is an actual example of statistics compilation and analysis of inspections of goods that have used the labeling solution of the present system by the 9 administrative districts of Beijing. This system simulation lasted 12 months. When a smart portable analysis and certification system (that is, the detector shown in Fig. 5) certifies a product, regardless of whether the product has been labeled by an element, the system will inquire about and compare the information being read with correct information stored in the database, to determine whether it is a labeled item or not a labeled item, before uploading the information to the data and information management system. After receiving the information, the data and information management system classifies and stores it, compiles statistics thereon and generates viewable text or tables on the result. It then automatically sends feedback on the result to the relevant department or user, who uses it as the basis for decision making.

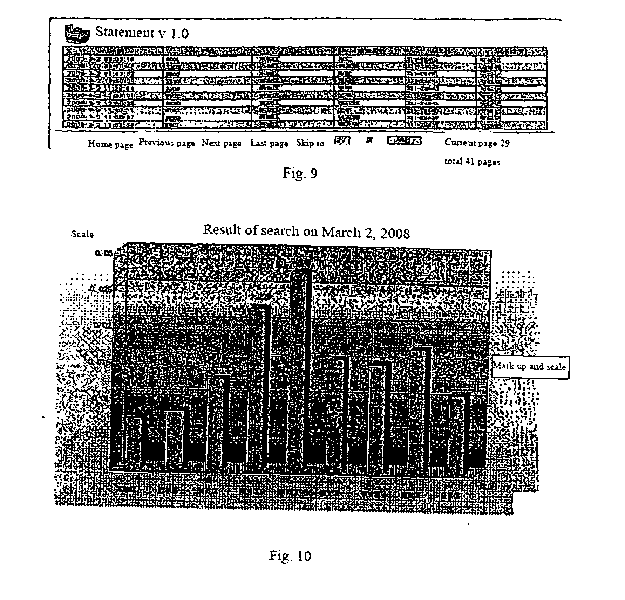

Fig. 9 is a K - MAC system statement displayed and printed after statistics is complied by the data center and shows the detection time (reading time) of each test, product number (product), the area information (location) that passes the positioning by the positioning system, the detector user (inspector) that has passed the fingerprint pattern verification sent back by the fingerprint sensor on the detector and that has been authorized by the data center, the detector number (reader) received and identified by the data center, as well as each reading result, where those with a label are labeled items and those without a label are unlabeled items. By clicking on the product number, an inquiry can also be made regarding all relevant information (not shown) on the customization of such a product. With authorization, said statement can be accessed and displayed in a data system at any level.

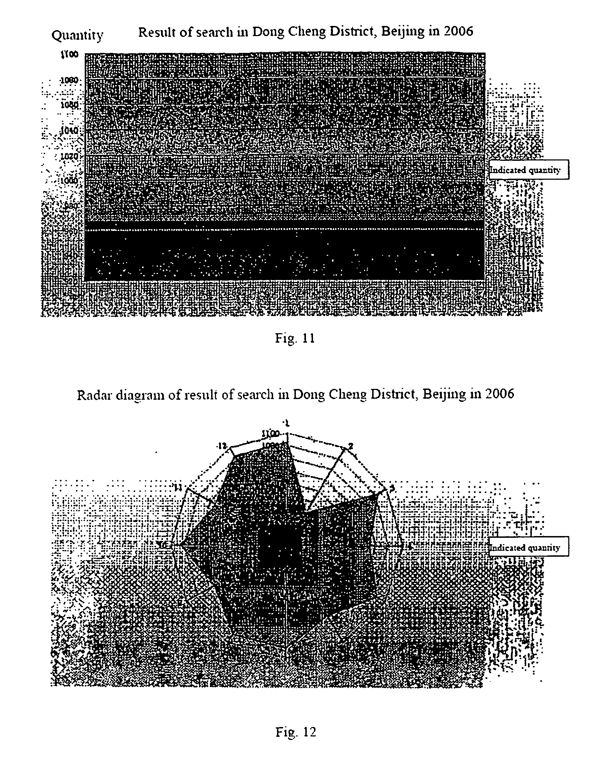

Once the detection data is entered, such a statement can be automatically generated. The user may also view various other forms of statement data at any corner of the Internet through K - MAC - Web. Following are examples of the statement data generated by the data center: Fig. 10 is a histogram to scale of the labeled goods in each administrative area generated based on this detection data; Fig. 11 is a line chart to scale of the labeled goods in Dong Cheng District of Beijing for the entire year; Fig. 12 is a radar chart to scale of the labeled goods in Dong Cheng District of Beijing for the entire year (corresponding to Fig. 11).

The actual application examples of the present invention: the item labeling and detection schemes of the present invention can be extensively applied in various fields of socioeconomic and administrative management, including without limitation: in fields such as identification, item marking, security certification, prevention of mix-up of commodities, logistic management, statistical analysis and accountability tracing, etc., there are broad prospects for applications. The items that can be labeled and detected using the present invention include without limitation the following fields: the government, enterprises, the military, police, customs, the judiciary, tax authorities, industry and commerce administrative authorities, commodity inspections, quality inspections, border inspections, transportation, machinery, automobiles, motorcycles, logistics, aviation, railroads, fire suppression, tobacco, liquor, food, medicine, gaming, lotteries, chemical industry, electronics, electric power, education, publishing, apparel, construction materials, metallurgy, communications, medical care, instruments, certificates, notes, vouchers, objects of art, cosmetics, cultural and sports items, crafts, welfare, insurance and finances, etc. and is an indispensable key step in the future development of the world economy, so it has broad market space.

Some specific applications are given below. Through such actual examples, technicians in the present field can be further aware of the many characteristics and advantages of the present invention.

### Commodity validation

Commodity validation and identification can protect the interest of the manufacturer and name brands and outstanding brands, and can better protect the legitimate interest of the consumer.

In terms of labeling technologies, mainly element labels are added to the surface or packaging of a commodity and the materials of the commodity itself. Following are specific actual examples of labeling methods for some commodities:

For foods and non-staple foods, the S - DNA element labeling information technology may be applied on all large and small packagings of foods and non-staple foods. The application method can choose any one or a combination of several of the methods below for use: (1) Add an S - DNA element label during the production process of the packaging material of food (for example, by adding pulp); (2) During the printing process of food packaging, add the S - DNA element to the printing ink; (3) Select any information point on the finished packaging product at will (especially at openings and seal breaking locations) and directly brush or apply the S - DNA element label to the surface of the packaging for labeling; and (4) Use a dedicated ID sticker containing the S - DNA element label on the food packaging.

For book type products, choose any one or a combination of several of the methods below for use: (1) Add an S - DNA element label to the cover printing ink of books; (2) Add an S - DNA element label during the production process of the paper used for the books; (3) Select any information point on a book at will (on the cover or back cover) and directly brush or apply the S - DNA element label to the surface of the packaging for labeling; and (4) Use a dedicated sticker containing the S - DNA element label on books.

For CD and magnetic tape types of products, choose any one or a combination of several of the methods below for use: (1) Add an S - DNA element label to the outer packaging printing ink of CD and magnetic tape types of products; (2) Add an S - DNA element label to the printing ink of the trademark or interior decorative labels of CD and magnetic tape type of products; (3) Add an S - DNA element label during the production process of the material of CD and magnetic tape types of products; (4) Select any information point on CD and magnetic tape types of products at will and directly brush or apply the S - DNA element label to the information point for labeling; and (5) Use a dedicated sticker containing the S - DNA element label on CD and magnetic tape types of products.

The application of element labeling technologies on medicines and healthcare products is mainly on their various types of packagings (packagings such as large, small boxes, pills, water, injections and capsules, etc.). Choose any one or a combination of several of the methods below for use: (1) Add an S - DNA element label during the production process of multilayer packaging (paper packaging and plastic packaging, etc.) material (for example, by adding pulp); (2) Add an S - DNA element label to the printing ink during the printing process of the packagings of medicines and healthcare products; (3) Select any information point on the finished packaging products for medicines and healthcare products at will (especially at seal breaking locations) and directly brush or apply the S - DNA element label to the surface of the packaging for labeling; (4) For packagings of medicines and healthcare products that are glass products, an S - DNA element label may be added to the printing ink of their trademarks, labels or text; and (5) Use a dedicated ID sticker containing the S - DNA element label on the inner and outer packagings of medicines and healthcare products.

For liquor products, the application is mainly on their various packagings. For application methods, choose any one or a combination of several of the methods below for use: (1) Add an S - DNA element label during the production process of the materials of the outer packaging (paper, wood, plastic and metal packagings, etc.) material of liquor products; (2) Add an S - DNA element label to the printing ink during the printing process of the outer packagings of liquor products; (3) Select any information point on the finished packagings of liquor products at will (especially at seal breaking locations of the outer packaging) and directly brush or apply the S - DNA element label to the surface of the packaging for labeling; (4) For packagings of liquor products that are glass and ceramic containers, an S - DNA element label may be added to the printing ink of their trademarks and bottle lids; and (5) Use a dedicated ID sticker containing the S - DNA element label on the outer packagings or containers of liquor products.

For application of the element labeling technology on tobacco products, choose any one or a combination of several of the methods below for use: (1) Add an S - DNA element label during the production process of the materials of the packaging (large packaging and small packaging) material of tobacco products (for example by adding pulp); (2) Add an S - DNA element label to the printing ink during the printing process of the packagings of tobacco products; (3) Select any information point on the finished packagings of tobacco products at will and directly brush or apply the S - DNA element label to the surface of the packaging for labeling; (4) Add an S - DNA element label during the tobacco product packaging opening and drawing process; and (5) Use a dedicated ID sticker containing the S - DNA element label on the packagings of tobacco products.

For apparel and leather types of products, the application is mainly on products themselves and the related certificates. For application methods, choose any one or a combination of several of the methods below for use: (1) Add an S - DNA element label during the production process of apparel and leather types of products to their materials (cloth, cotton flax and leather, etc.); (2) Add an S - DNA element label to the dyes of apparel and leather types of products; (3) Add an S - DNA element label to the printing ink during the printing process of the outer packagings of apparel and leather types of products with packagings; (4) Select any information point on the finished apparel and leather types of products at will and directly brush or apply the S - DNA element label to the surface of the products for labeling; (5) Brush and apply an S - DNA element label to the decorations of apparel and leather types of products (buttons, zippers and decorative items, etc.); (6) Add an S - DNA element label to the trademarks or the printing ink of the trademarks of the apparel and leather types of products; (7) An S - DNA element label may be added to the printing ink of the relevant certificates of the apparel and leather types of products; and (5) Use a dedicated ID sticker containing the S - DNA element label on the apparel and leather types of products.

During the validation and identification of commodities, using the above labeling methods and K - MAC system, each commodity of each manufacturer will encode the exclusive group of S - DNA element obtained thereby. When each S - DNA element code is synthesized, such information can be customized by the manufacturer, seller and management departments with authorization and can be added, revised and deleted at any time during use.

Manufacturers, law enforcement and inspection authorities, wholesalers, purchasers and consumers, etc., can all be provided with supporting devices, such as a portable X fluorescent detector, which enables them to achieve real time and on site detection and identification of each commodity with support from databases at various levels. During such detection and identification, the terminal display of the detector can not only advise whether a commodity is a "labeled item" and a "non labeled item," but can access various types of information from databases at various levels (under authorized management), to learn detailed information regarding various aspects of the commodity.

Prior art normally uses affixation of various types of labels on the surfaces of commodities for identification and validation, which must take up a significant amount of surface volume or area of the commodities, without greater flexibility and being vulnerable to counterfeiting. Most of the element labeling methods in the present invention can penetrate deeply into the materials of an item, and even if the sticker or packaging identification solutions are used, only a very small amount of surface area needs to be taken up. Since identification of an element label can reach the ppm level, with a negligible amount used, they cannot be manually stripped away, with good concealability. Therefore, they are not easy to counterfeit or even impossible to forge. An element label is not subject to restrictions in terms of the materials, shape and volume of the item being labeled. Therefore, it can be minutely affixed onto each single commodity, with very large room for flexibility. Once an element label is used, it becomes a permanent label of the identification information of an item. At the same time, an element label is also compatible with the concurrent use of the traditional bar code or 2D code.

A significant advantage of the present invention is that it links up an element label with powerful database support. If there is no support from databases at various levels in the present invention, then element labeling solution is just to get a simple "yes" or "no" determination. But the solution in the present invention transcends the limitations of the prior art. Due to the support from the databases, any relevant information on each commodity can be stored and learned by the user (of course under authorized management). Thus, management of the circulation of commodities, the consumer's right to learn, the finding of accountability and retroactive determination, etc., have all become quite significant.

For example, the swapping of commodities has always been a difficult issue that has plagued manufacturers and enterprises. Such a mix-up refers to the fact that driven by profits, sellers sell commodities at location B that should be sold at location A. After each commodity is labeled, it will receive a group of independent element codes. When each S - DNA element code is synthesized, all of the information represented by such an element code on the labeled item is collected and stored in a K - MAC system. The information on the labeled item can include information on the sales territories. Thus, oversight personnel can use portable detectors to perform real time, on site detection and validation on the labeled items. If products labeled for sale in territories marked A are found at location B, disciplinary actions can be taken against such swapping action, thus preventing the occurrence of such swapping.

### Shopping mall, supermarket and consumer solutions

By using the technologies of the present invention, shopping malls and supermarkets can design many solutions.

For example, one solution is that a public detection platform can be set up at a special site or next to the counter of a specific commodity where a device based on the present invention is provided, such as a portable or desktop or vertical X fluorescent detector. The consumer can perform detection and obtain information on his own on commodities that the manufacturer has already labeled with the above methods. Since the detector is connected to databases at various levels, the consumer can receive multifaceted information on a commodity. For example, information that can be displayed to the consumer includes: whether the product has been labeled, the manufacturer, the date of production, the suggested price of the manufacturer, the specifications and cautions for use of the commodity and commodity pictures, etc. An understanding by the consumer of the above information obviously improves the reputation of a shopping mall.

As an alternative, the shopping mall can provide only one public detector platform to the public. Such a platform includes all parts apart from the data processing and analysis device. The consumer can use his own PDA or cell phone that has remote reception abilities. Insert the universal interface of the detector platform and remotely accept a detection program and data from a public center. Such a public center is a remote central database, which has collected all commodity information provided by a manufacturer to the public in advance. The manufacturer also makes public its website and provides a friendly operating interface, enabling an ordinary consumer to download a program and data believed to be reliable by using the PDA or cell phone that he carries with him. With the public detection platform, he can detect the commodity he desires to purchase conveniently, at any place and time, and the shopping mall that provides such a detection device greatly improves its reputation and competitiveness. For example, for consumer products such as cigarettes and liquor, which are plagued by serious counterfeiting, if the consumer can only make a difficult distinction between a fake and a genuine product based on a label that is easily forged and at a shopping mall where a professional detection device is provided to enable identification that is difficult to forge, there is no reason why the consumer does not purchase such a product at such a shopping mall.

Shopping malls and supermarkets can not only use the technical solutions of the present invention in providing the consumer with convenience, but can also use them as a means of management in replacement of or in combination with the bar code solution. One benefit is that for a commodity that the manufacturer has labeled, a shopping mall does not need to again expend human and material resources on affixing a bar code on each commodity and only needs to add information such as customized pries from the database inherited from the manufacturer. For a commodity not labeled yet by the manufacturer, the shopping mall can totally use the element label technology provided by the present invention to affix a clear sticker at a specific location of the commodity. The element label can be made as adhesive with a transparent solution, without any pattern that contains visible bars, and can be made very small (due to a very small volume used). This is a really "green" label that does not have any impact on the exterior look and aesthetic beauty of a commodity. As a transition solution, the scheme provided by the present invention can also be used in combination with the bar code, which only requires the concurrent addition of a bar code reader to the front end of the device provided by the present invention, such as the X fluorescent detector. The present invention has already designed a compact and portable X fluorescent terminal detector which is totally suitable for handheld use by the cashier at a POS terminal.

Since the present invention has designed a database system linked up to the element labeling technology, it is possible to design a "management system" scheme that includes settlement functions instead of the "validation system" scheme that prior art can provide only. This provides broad application prospects for the popularization of the technologies of the present invention.

In addition, the functions needed by the mobile phones of consumers can be viewed as a 3G network added value content, from which added value contents, such as item identity certification, data information, graphic information and video transmission, etc. can be provided to the consumer. In a 3G network where added value services are sorely lacking, effective and feasible service contents are thus introduced.

### Automobile services and maintenance

Automobiles are a high end consumer product, and their labeling and monitoring are quite important for both the manufacturer and the consumer. It is even more significant for the used car market, where there is an extremely high requirement for reputation.

The application of the S - DNA element labeling information technologies on products such as automobiles, motorcycles and their accessories is mainly on the products themselves and the related certificates. For application methods, choose any one or a combination of several of the methods below for use: (1) Add an S - DNA element label during the production process of automotive products to the materials or plated layers of their key parts (such as engines, chasses and bodies, etc.); (2) Select any information point on the finished automotive products and directly brush or apply the S - DNA element label to the surface of the products; (3) An S - DNA element label can be added to the printing ink during the printing process of the relevant certificates of automotive products; and (4) Use a dedicated ID sticker containing the S
- DNA element label on the automotive products.

Through the database management system of the present invention, each product of automotive and motorcycle products (even the location of each part) will respectively receive an exclusive group of S - DNA element codes. When each S - DNA element code is synthesized, all of the information on the automotive products and manufacturers represented by such element codes is collected and stored in a database management system, which facilitates validation and use by the manufacturers, distributors, repair shops and consumers in the future. In addition, the user can continuously supplant information in the existing database on the use and repair of a vehicle, for example, the maintenance records of a maintenance outfit on the entire vehicle or a particular part, the registration records of transportation management authorities and inspection records, etc. On the one hand, this facilitates management by management authorities, and regarding the managed portion connected to K - MAC system and network at various levels only needs to use a portable X fluorescent detector to perform a simple scanning action, and the information sent over from the K - MAC system is immediately downloaded to the local database of the management authorities, whereupon the entry and registration work can be completed. Historical records such as vehicle maintenance information and traffic violations, etc., can also be downloaded. On the one hand, through vehicle identification, the vehicle maintenance outfit can inquire with the database and record maintenance information on the vehicle, which facilitates customer information management and fee management. On the other hand, an automobile buyer, especially a used vehicle buyer, can instantly obtain all information on a vehicle from the database by using the detection device of the present invention, that is, objective information such as, for example, manufacturer information, information on ex factory date, the purchase date information, maintenance information, traffic violation and accident information and whether the key parts are original manufacturer's parts, etc. It should be understood that since the label of the present invention is highly reliable, forging is impossible. The database information obtained by the user can be acquired through his / her PDA or cell phone from a public central agency (that is a remote database). Therefore, the truthfulness of such information is beyond doubt. Thus, a second hand vehicle buyer no longer has to worry about his "feeling" and "experience" in buying cars.

Again, it can be seen that the system that present invention forms by combining a label scheme that is impossible to forge with a powerful database system is absolutely not a simple identification scheme, and is a comprehensive scheme that can play a huge role in many aspects of social management, market development, computerization of information and reputation mechanism.

### Certificates and licenses, door access and vouchers

Certificates and licenses mainly include: the identification cards, household registration cards, passports, passes, employment identification cards, educational certificates, marriage licenses, medical insurance cards, real estate titles, vehicle driving permits, drivers licenses, vehicle license plates and various skills certificates, etc., held by natural persons; various certification certificates, such as business licenses, organizational code certificates, tax registration certificates, titles, birth permits, sales permits, hygiene permits and CCC certificates, RS 9000 certificates and green environmental protection certificates, etc. Vouchers mainly include invoices, tax certificates and tax payment completion certificates of the tax authorities, etc; customs declaration forms and duties forms of the customs, etc; deposit tickets, checks, bills of exchange, promissory notes and letters of credit of financial institutions, etc; postage stamps, parcel post receipts and remittance notices of the post offices, etc.; airplane tickets, train tickets, bus tickets, ship tickets, taxi fare receipts and shipping documents of transportation authorities, etc; movie tickets, performance tickets and admissions tickets of entertainment authorities and court summons, etc.

The main methods to apply the S - DNA element labeling information on certificates and licenses, door access and vouchers are: choose any one or a combination of several of the methods below for use: (1) During the production of certificates and licenses, door access and vouchers, add an S - DNA element label to the materials of certificates and licenses, door access and vouchers (for example, by adding pulp, plastics and magnetic cards, etc.); (2) During the printing of certificates and licenses, door access and vouchers, add an S - DNA element label to the printing ink; (3) For certificates and door access, an S - DNA element label may be added to the printing oil; (4) Select any information points on finished products of certificates and licenses, door access and vouchers and directly brush and apply an S - DNA element label on the surfaces thereof.

Through the use of the K - MAC system, each certificate and license, door access and voucher will receive its own S - DNA element code. When each S - DNA element code is synthesized, all information on such certificates and licenses, door access and vouchers represented by such an element code is collected and stored on the K - MAC system. The aforementioned information can include: the code of the labeling element, the characteristic code of the element, the certificate and license numbers, the date of issuance, the term of use and the information and material on the certificate and license issuers and holders, including the photos of the holders, etc.

The management and user departments of certificates and licenses, door access and vouchers can use portable detectors to perform real time detection on various types of certificates and licenses, door access and vouchers with support from a database system, in order to validate the authenticity and term of certificates and licenses, door access and vouchers, thus ensuring the authenticity, validity and security of certificates and licenses, door access and vouchers. For example, when a local or remote database is connected, in addition to including a "yes" or "no" determination, information returned to the display of the portable detector may also return personal material and information on the holder, such as his photo, etc., thus ensuring perfect safety.

Since the solution of the present invention is combined with a database system, it transcends the limitations of static management of certificates and licenses, door access and vouchers in the general sense. At the same time, it has both dynamic management and comprehensive management functions. That is, the management of the usage process and computerized and comprehensive information management. For example, the door access card of an organization can concurrently serve as a parking fee payment card; during each entry, the detector will enter the scanning time into a local database concurrent with authentication of the holder's identity, and the scanning time will also be stored in the local database for an exit. The database software will promptly calculate the fee based on the interval between the times separately recorded and display it on the display screen at the door. At the same time, it stores the item in the form of an account in the database records of the holder. The same door access card can be used in the management of different tasks, for example, it can also be used in the electronic billing of a cafeteria, as long as the local database of the organization is shared, thus making it a "the only card" within the system of the department. Based on a beneficial aspect of the present invention, no certificates and licenses, door access and vouchers need to have a "card" shape, because an element label can exist in various types of media individually, in various concealed forms and without a shape. For example, someone desires to use the surface of his attaché case as a label, and someone else desires to use his bracelet as the material for a label. Both can be accomplished easily, whereas electronic certificates and licenses using prior art all must have dedicated room to accommodate IC chips or labels. There is no fear for the theft of such individualized certificates or labels, as the thief does not know at all what he has stolen and has no way to know the functions of the certificate contained therein. The database system only needs to cancel the authorization of such a certificate to invalidate it permanently.

### Management of guns and ammunition

The safe management of guns and ammunition is critical. Any management of guns and ammunition that is out of control or theft, stealing and loss of such items may cause serious consequences. In the present invention, technical characteristics and performance of the S - DNA element labels such as a strong permeability and their ability to permeate through the surface and molecular structures of metal substances can be used to directly label guns and ammunition.

After labeling and processing, each gun and each type of ammunition will respectively receive a group of S - DNA element codes based on their classification or based on special needs. When each S - DNA element code is synthesized, all information on such guns and ammunition as well as their users represented by such an element code is collected and stored on the database management system.

Using a portable detector and supported by the database management system, security management personnel of state and government agencies perform real time, on site detection on various types of guns and ammunition, to ensure the absolute safety of the storage of guns and ammunition. For example: (1) Information on the assigned user of each gun can be stored on the database management system through an S - DNA element label. As soon as a loss incident of a gun occurs, the information on the custodian in the database corresponding to the element label can be relied on to perform tracking on the lost gun. (2) As soon as a gun labeled by an element is taken out of a specified area without authorization, the detection device can issue a warning jointly with the door access system. (3) Due to resistance of the S - DNA element to high temperature, even after a bullet is fired, as long as a bullet or bullet casing is found, and regardless of whether the bullet or bullet casing is deformed, a detector can still be used to accurately find the S - DNA element label. By relying on the database system, information related to such a bullet can be quickly verified, thus finding the person directly responsible. Currently, during case work by public security organs, the ingredients of bullets or bullet casings are also analyzed, to determine the date of production and batch number of ammunition, etc., but the target of analysis is not an artificially added label, but a passive investigation is being conducted to find the differences in materials and ingredients of different manufacturers and different batches, etc. Due to application by the labeling and detection system of the present invention of artificially synthesized S - DNA element labels and due to the support by information from a powerful database linked up with each label, the system is able to perform tracking and positioning of each bullet accurately. With large scale, automated assembly line operations and a scheme for random encoding by the database, it is not difficult to achieve labeling of each gun and ammunition and computerized management. For industrialized, large scale manufacturing, the labeling of each item does not require a high cost. All items that require large scale labeling can be implemented in a similar manner.

### Art objects and cultural relics.

Art objects, cultural relics and literature are precious because of their authenticity. There is a world of difference in value between genuine objects and calligraphy and counterfeits.

On newly made and newly collected art objects, cultural relics and historic literature, the methods to apply element labels are as follows: for application methods, choose any one or a combination of several of the methods below for use: (1) Select any information points on art objects, cultural relics and historic literature and directly brush and apply an S - DNA element label on the surfaces of such art objects, cultural relics and historic literature; (2) An S - DNA element label can be added to the printing ink of the relevant certificates for art objects, cultural relics and historic literature; and (3) Use a dedicated ID sticker containing the S - DNA element label art objects, cultural relics and historic literature.

Through S - DNA element encoding of each art object, cultural relic and historic literature, all information on each art object, cultural relic and historic literature and the histories of the collectors is collected and stored on the database management system. Using a portable detector and supported by the database management system, management personnel perform real time, on site detection of various types of art objects, cultural relics and historic literature, to ensure that art objects, cultural relics and historic literature will not be stolen, swapped, counterfeited and smuggled, etc. When art objects, cultural relics and historic literature are auctioned, traded and circulated in the future, inspection of the labeled items and acquisition of information thereon is proof of their authenticity.

Based on an important aspect of the characteristics of the present invention, identifiable labeling elements not only include externally added elements, but also include elements inherent in the materials of an item itself. The technical solution in the present invention can be used in the validation of ancient cultural relics. For example, fingerprint information, such as the specific values of major, trace elements and isotopes in ancient porcelain after sintering at a high temperature do not change with changes in the times. Therefore, the use of X fluorescence technology can provide reliable scientific basis for analysis, validation and authentication of ancient porcelain. For example, based on measurements of confirmed and quantified cultural relics, during the Tang, Song and Jin Dynasties, the peak area count ratio of Zn / Fe in the porcelain inner layer at the Ding Kiln varied within a range of 0.01 - 0.04, the Ti / Fe ratio was 0.02 - 0.05 and the Mn / Fe ratio was 0.03 - 0.15. If the wall glaze of an alleged "cultural relic" is detected to have a Zn / Fe ratio of about 1.1 - 1.2, a Ti / Fe ratio of about 0.06 - 0.08 and an Mn / Fe ratio of about 0.01, then it can be basically concluded that the alleged "cultural relic" was not produced at the Ding Kiln during the Tang, Song and Jin Dynasties. Currently, cultural relic validations mostly depend on one's "eyesight," and some validations are done through technical means, too. But usually, various parameters are brought back to the laboratory for measurement, and then a comparison is made with real cultural relics or historical information is searched for a comparison. This is both time and energy consuming. In this respect, through the K - MAC - Lab database and based on statistics and inspections and through calculation and combination methods, the present invention first creates a very reliable and complete standard spectral database with the major and trace element ingredients and characteristic parameters of a large number of ancient porcelain samples from the appropriate times and kilns. When the portable X fluorescent detector of the present invention is used and when a connection is made remotely with said database, any ordinary person holding a portable X fluorescent detector at the site of cultural relics trading can become a "cultural relics expert."

Although different embodiments of the present invention have been described above, it should be understood that they have merely been given by way of examples and by way of limitations. For technicians in the present field, obviously, various changes and revisions can be made that do not deviate from the spirit and scope of the present invention.

## Claims

1. A method to label and detect an item, including:
define the label to be used on an item. Such a label includes at least a chemical element inhering in and selected from an item and / or an added chemical element;
provide a database, said database includes the data on said label;
detect the signal emitted by the item, generate detection data and use such detected data for comparison with the data in the database; and
based on the comparison result, the database will determine whether the detected item is a labeled item or a non labeled item.

2. A method to manage an item, including:
define the label to be used on an item. Such a label includes at least a chemical element inhering in and selected from an item and / or an added chemical element;
provide a database, said database includes the data on said label;
detect the signal emitted by the item, generate detection data and use such detected data for comparison with the data in the database; and
based on the comparison result, the database will determine whether the detected item is a labeled item or a non labeled item and read at least one piece of information on said item.

3. The method set forth in Claim 1 or Claim 2, which is **characterized in that** the aforementioned label includes at least two chemical elements.

4. The method set forth in Claim 1 or Claim 2, which is **characterized in that** at least one of the aforementioned chemical elements is an element with atomic numbers exceeding 5, optimally elements with an atomic number exceeding 22, which are elements in d sector and f sector of the periodic table, more optimally elements selected from the chemical elements below: strontium, rubidium, yttrium, cesium, lanthanum, cerium, praseodymium, rubidium, samarium, europium, gadolinium, terbium, dysprosium, erbium and ytterbium.

5. The method set forth in Claim 3, which is **characterized in that** define one or several of the aforementioned elements as the benchmark labeling elements, wherein for the aforementioned benchmark labeling elements, optimal are elements with an atomic number exceeding 22, which are elements in d sector and f sector of the periodic table, more optimal are elements selected from the chemical elements below: strontium, rubidium, yttrium, cesium, lanthanum, cerium, praseodymium, rubidium, samarium, europium, gadolinium, terbium, dysprosium, erbium and ytterbium, and further more optimal are selected from yttrium, lanthanum, cerium, europium and ytterbium, and wherein the volume of other elements is subject to the volume of the benchmark labeling elements multiplied by integers or decimals.

6. The method set forth in Claim 1 or Claim 2, which is **characterized in that** the minimum content of the labeling elements is 100 ppb - 50 ppm and their minimum content can be further reduced with technical advances.

7. The method set forth in Claim 1 or Claim 2, which is **characterized in that** the aforementioned data sources include one or several: elements, the concentration levels of elements, the concentration level ratios among the elements, 1 D or 2D or 3D distribution relative to the item and any combination of the above.

8. The method set forth in Claim 1 through Claim 5, which is **characterized in that** the element label can be added prior to and / or during / or subsequent to the production process of an item and can use methods such as coating applications, spraying, precipitation, immersion, mixing and printing, etc.

9. The method set forth in Claim 1 or Claim 2, which is **characterized in that** the chemicals and / or simple substances of the elements used for labeling can be bonded with carrier substances, wherein the aforementioned carrier substances include gases, liquids and / or solids.

10. The method set forth in any of Claim 1 through Claim 5 and Claim 9, which is **characterized in that** the specific formula for element labeling is selected and generated by a database system and / or by a human, and its data is stored in a database.

11. The method set forth in Claim 10, which is **characterized in that** quantified formula management is performed through a database system and / or by a human and / or automated device.

12. The method set forth in any of Claim 1 through Claim 11, which is **characterized in that** a device containing an excitation source is used to scan an item for detection, the aforementioned excitation source being selected from: an X ray excitation source, a γ ray excitation source, an α ray excitation source, an electronic beam excitation source, an ultraviolet excitation source, a visible light excitation source, an infrared excitation source, a laser excitation source, a nuclear resonance excitation source or a combination thereof.

13. The method set forth in Claim 10, which is **characterized in that** the detection device used for detecting an item is optimally an X fluorescent detector.

14. The method set forth in any of Claim 1 through Claim 13, which is **characterized in that** the aforementioned database includes the terminal database that the X fluorescent detector itself has and / or a local database connected to the X fluorescent detector and / or a remote central database connected to the X fluorescent detector and / or local database.

15. The method set forth in any of Claim 1 through Claim 11, which is **characterized in that** the X fluorescent detector is connected to the local and / or remote central database through a wired or wireless network, and that the local and remote central database are connected through a wired or wireless network.

16. The method set forth in Claim 15, which is **characterized in that** the aforementioned network supports data transmission and sharing among multiple networks, for example, between the CDMA network and GSM network.

17. The method set forth in any of Claim 11 through Claim 16, which is **characterized in that** the aforementioned data includes data obtained through methods such as item scanning, database calculations and / or combinations, manual calculations and / or combinations, or combinations of the aforementioned methods, including spectral data.

18. The method set forth in Claim 17, which is **characterized in that** the data obtained is selectively defined, and the data is formed into fingerprint data after being defined, wherein the aforementioned fingerprint data further includes information on the elements, information on the concentration levels of the elements, information on the concentration level ratios of the elements, information on formulas and information on the item.

19. The method set forth in Claim 18, which is **characterized in that** the database stores fingerprint data and by comparing data obtained through detection of an item with the fingerprint data stored in the database, determines whether an item being detected is a labeled item or a non-labeled item, and reads at least one piece of information regarding such an item.

20. The method set forth in any of Claim 12 through Claim 16, which is **characterized in that** through DGPS + GSM + GPRS / CDMA tracking and positioning technologies, the remote central database tracks, positions and remotely controls the terminal database on the X fluorescent detector and / or the local databases connected to the X fluorescent detector.

21. The method set forth in any of Claim 12 through Claim 16, which is **characterized in that** the X fluorescent detector can be authorized or have its authorization canceled, wherein such authorization or cancellation of authorization is completed through the authorization controller placed on the X fluorescent detector and / or authorization or cancellation of authorization is remotely controlled through the terminal database connected to the X fluorescent detector, and or through the local databases connected to the X fluorescent detector and or through the remote central database, and wherein the authorization controller includes a start password, biological sensors, a mechanical switch and a power supply switch.

22. The method set forth in Claim 19, which is **characterized in that** the aforementioned data is stored in the database after authorization and encryption or is compared with the fingerprint data in the database after authorization and encryption.

23. The method set forth in any of the claims above, which is **characterized in that** the aforementioned information includes one or several combinations below:
information used to identify the identity of an item or the holder of the item,
information used for management of an item or the holder of the item, and other customized information that is continuously added to, deleted from and changed in the database after labeling, thus facilitating, based on the specific data needed for an item and used by the holder, customization of any type and content of information that is related to the item, wherein such information can be stored in databases at various levels concurrently or in a tiered manner, to facilitate mutual access and use.

24. The method set forth in Claim 19, which is **characterized in that** the aforementioned database uses cluster systems and distributed calculations.

25. A device for carrying out the methods set forth in any of Claim 1 through Claim 24, which is **characterized in that** there is a tester used to detect the aforementioned chemical clement label and a database connected to the aforementioned tester.

26. The device set forth in any of Claim 25, which is **characterized in that** the following are placed on the aforementioned tester: an excitation source, a detector, a data processing and analysis device, a display device placed on data processing and analysis device or standing by itself; the aforementioned database is a terminal database of the tester itself and / or a local database connected to the tester and / or a remote central database connected to the tester and / or local database; the tester is connected to the terminal database and / or local and / or remote central database through a wired or wireless network, and that the terminal database, local and remote central database are connected to each other through a wired or wireless network.

27. The device set forth in Claim 25 or Claim 26, which is **characterized in that** the aforementioned excitation source is selected from: an X ray excitation source, a γ ray excitation source, an α ray excitation source, an electronic beam excitation source, an ultraviolet excitation source, a visible light excitation source, an infrared excitation source, a laser excitation source, a nuclear resonance excitation source or a combination thereof.

28. The device set forth in any of Claim 25 through Claim 27, which is **characterized in that** the data processing and analysis device is an electronic device with wired and / or wireless transmission abilities, such as various palmtop computers, PDA or smart cell phones.

29. The device set forth in any of Claim 25 through Claim 28, which is **characterized in that** the tester further includes an authorization controller, a tracking unit, a positioning unit and / or a remote control unit.

30. The device set forth in any of Claim 25 through Claim 29 which is **characterized in that** the tester further includes a bar code reader, an IC card reader, an RFID reader, a magnetic card reader, a 2D code reader and a biological reader.

31. The device set forth in any of Claim 25 through Claim 30, which is **characterized in that** the aforementioned tester optimally selects a whole portable or a detached portable.

32. The device set forth in any of Claim 25 through Claim 31, which is **characterized in that** the tester also includes device and software based on the DGPS + GSM + GPRS / CDMA tracking and positioning technologies.

33. The device set forth in any of Claim 25 through Claim 32, which is **characterized in that** the testing devices provide an embedded scheme, including a plate level scheme, a modular scheme and further including a chip level scheme, a DSP, a ROM chip with analysis and processing programs affixed thereon and a RAM chip are integrated and packaged into an FPGA chip, and the sensor portion for reading is made into a universal external device, wherein an abundance of peripheral allocation interfaces are provided, too, to interface with other devices, such as X ray, laser and infrared.
